# EUROPEAN PATENT SPECIFICATION

(11) **EP 1 444 633 B1**
(45) Date of publication and mention of the grant of the patent: **29.07.2009**
(21) Application number: 02800815.9
(22) Date of filing: 09.10.2002
(51) Int. Cl.: H04L 29/06, H04L 29/08

(54) **A SYSTEM AND A METHOD RELATING TO USER PROFILE ACCESS CONTROL**
SYSTEM UND VERFAHREN IN BEZUG AUF DIE BENUTZERPROFILZUGANGSREGELUNG
SYSTEME ET PROCEDE DE CONTROLE D'ACCES A UN PROFIL D'UTILISATEUR

(30) Priority: 12.10.2001 US 976500
(43) Date of publication of application: 11.08.2004
(73) Proprietor: TELEFONAKTIEBOLAGET LM ERICSSON (publ), 164 83 Stockholm (SE)
(72) Inventor: YEUNG, Peter, S-164 41 Kista (SE); SANDSTRÖM, Henrik, SE-122 48 Enskede (SE)
(74) Representative: Norin, Klas
(86) International application number: PCT/SE2002/001832
(87) International publication number: WO 2003/032222

(56) References cited:
- EP-A2- 0 991 005
- WO-A2-01/50299
- US-B1- 6 285 983

## Description

### FIELD OF THE INVENTION

The present invention relates to a system allowing end user control of the distribution and maintenance of end user personal profile data, i.e. data within personal profiles, in a data communication system providing communication between applications, which comprise and/or communicate with service/information/content providers holding end user personal profile data. The invention also relates to a method of controlling access to personal profile data within a personal end user profile in a data communication system running a number of applications, comprising or communicating with information/content/service providers. The data communication system may be third party controlled, or alternatively it is not.

The invention also relates to a personal profile data control network for controlling the access to personal profile data.

### STATE OF THE ART

In the information society of today the personal profile data of end users will be more and more spread out at different locations e.g. on Internet, and with the fast development of global data communication networks, it gets possible to distribute data both via fixed and via wireless applications. Data will also be pushed out to an even higher extent than hitherto, e.g. by companies to other companies etc. The need for means to protect privacy therefore increases. For the individual end user it is exceedingly important that his personal information can be protected from uncontrolled distribution among end users, companies etc. At the same time as, for example, the number of services that can be provided to end users, over for example Internet, increases, it becomes more and more interesting for service and information providers to be able to obtain detailed information about users. This may be in conflict with the privacy aspect for the end users, as well as it of course also may be attractive for the end users, since they can also take advantage of personal information being spread out, and thereby obtain other useful or desired information etc. For statistical purposes it is interesting for e.g. companies to get information in order to become familiar with the needs for services, products etc. An end user may today have stored personal profile data of different kinds, at different locations, which contains various kinds of information about the user, such as name, address, particulars habits, hobbies, accounts, financial situation etc. Thus, it is exceedingly important for the service/content providers to know the characteristics of existing and potential customers to allow for targeted advertising etc., at the same time as it is also exceedingly important for the end user to be able to protect the personal profile data.

Thus there is an inherent conflict between different interests. Therefore laws and regulations have been created in an increasing number of countries, such as for example within the European Union, to restrict the accessibility to privacy information. Such laws and regulations often vary from one country to another, but generally they have in common that the consumer or the end user should have control over his or her profile, including conditions for its release.

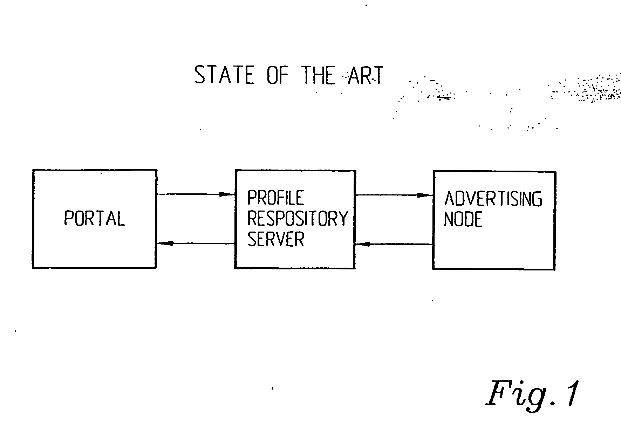

Solutions have been suggested for systems for protecting user personal profile data acting as a kind of a safe or functioning as a profile repository. The profiles can, by replacement of the user identity, for example the mobile phone number, through a code, be stored such that there will be no connection to the user identity, throughout the network. Such a repository or storing means for user profiles can be arranged at different nodes within the network. One example is illustrated in Fig. 1, with a profile holding means provided between a portal and an advertising node. In Fig. 1 it is supposed that the personal profile has been transferred to the advertising node, with the user identity in the form of a mobile phone number (MSISDN or MIN) replaced by a code, which is totally unrelated to the phone number. The procedure will then be that the portal requests an advertisement for a user, e.g. with a phone number, 1. The profile holding means then forwards the request to the advertising node with the mobile phone number converted to a corresponding code, 2. The advertising node subsequently returns the advertisement to the personal profile holding means, 3, which subsequently returns the advertisement to the portal, 4. Such a system is for example known under the trademark Respect ^{™} which is an e-business platform enabling privacy control, identity management and instant personalization for on-line transactions. The profile holding means is then represented by the Respect ^{™} server which is a virtual infrastructure located at the mobile Internet provider.

However, there are several problems associated with systems as described above. One main issue is the transactional capacity of the profile protecting means. Normally the number of users that can be handled is limited, which results in serious problems for real time applications. With reference to the example given above, advertisements have to be served when an end user actually visits a particular page, or accesses a particular service, and many operations are time-critical. The time criticality is particularly important in wireless environments.

Another problem relates to the lack of generality when handling flows from several requesting nodes and from several information holding nodes. Another problem that is not solved in a general manner is really pertinent, and it is concerned with which nodes that should be allowed to request data from other nodes. Mapping between a code, for example known by the advertising node, and the phone number, as known by the portal, is actually performed in the profile holding means, also called a profile repository. It is not acceptable that for example the requesting portal asks the profile repository for the corresponding code, and then requests an advertisement for this code since, then the phone number and the code would be visible together.

### SUMMARY OF THE INVENTION

In order to solve these and other problems a system is needed through which end users are given the possibility of controlling which information, within a personal profile, that should be accessible by others, for example via applications etc, i.e. to be able to protect their private information at the same time as being given the opportunity/ possibility of taking advantage of allowing access to others in order to get information etc. that is of interest for the specific end users, in a substantially automatic manner, and without expressively having to request such information.

The invention is defined in the independent claims.

It is also an object of the invention to provide a system which makes it possible to interconnect a large number of different information applications and service enablers or service/content/information providers while maintaining privacy and dynamical information routing. It is also an object to provide a system through which applications can be connected to the appropriate information/service/content providers or information holders without these applications having to know the address of the actual information holder or information provider. It is also an object to provide a system to facilitate for applications to find the information that is desired within the network, while still duly considering privacy requirements and restrictions. Further yet it is an object to make connection to applications as simple as possible, and without requiring different interface solutions for different kinds of providers, end users etc. It is also an object to find a solution allowing for locking/unlocking of private or personal information, particularly in a fast and easy manner, and in addition thereto to provide for a highly scalable system, as far as protection of data within personal profiles is concerned.

Still further it is an object to provide for easy and flexible control of private or personal information within fixed as well as within mobile data communication networks, such as for example Internet, Mobile Internet or private IP based Wide Area Networks (WAN), and to allow for a high scalability as far as equipment and networks are concerned, and also to support load sharing and redundancy solutions on network level.

A main object of the invention is to allow for anonymous IP addressing and anonymous provisioning of information. Still other objects are concerned with the provisioning of easy operation and maintenance, while still allowing for a privacy protection facility, and to reduce management requirements as much as possible, as far as privacy protection is concerned. It is also an object to suggest a solution that allows for, optimizes and facilitates, protection of personal information both as far as the end user is concerned, and as far as the operator and application provider are concerned. Particularly a solution is needed through which also problems associated with the use of discontinuous protocols or Application Programming Interfaces (API), such as for example HTTP (Hypertext Transfer Protocol) as opposed to for example E-mail services using continuous protocols like SMTP (Simple Mail Transfer Protocol), are concerned.

Moreover it is an object of the invention to provide a solution which both makes it easy for the end user to control the flow of personal information, e.g. between different companies, as well as makes it possible for example for companies or application providers handling personal, private information, to meet the requirements of laws and regulations for respecting privacy, and at the same time to be able to provide services based on personal information, for example position data. It is also an object to enable for example for an application provider to directly, in a digital way, get permission by the end user (indirectly), to use the requested information.

A personal profile data control network and a method respectively, of controlling access to personal data within personal end user profiles, are also needed, through which one or more of the above mentioned objects can be fulfilled.

Therefore a system as initially referred to is provided, which comprises a personal profile data protection network with at least one central protection server means, comprising or communicating with information holding means, e.g. a database, holding personal protection profile information, and a number of distributed access means, for example comprising software modules. For each one of said applications at least one access means is provided, and grant/reject of a request for access to end user personal profile data within a profile by a requesting application is determined by the central protection server in communication with the requesting application and/or the information providing application, or more specifically in communication with the corresponding access means thereof. Translating means, e.g. comprising encrypting means, are provided for identity translation and verification, and the identity of a requesting application will be concealed for an information providing application and vice versa. This means for example, that an application provider does not know where a requested piece of information is located and the operator of such a personal profile data control network or privacy information network, does not have to expose the addresses between application provider or information provider and requester. Particularly there is one access means for each application. Alternatively there may be a plurality or a cluster of access means for at least one application or for all applications, e.g. for redundancy reasons and/or to allow for load sharing at the site of the application. The server means at a site, particularly the protection profile holding means associated therewith, may also be redundant. Redundant server means (servers and/or profile holding means) may be provided; at a site or distributed.

Particularly the central server means only comprises personal protection profile data. This means that it does not contain any personal profile data as such, which is distributed throughout the system. The personal protection profile data comprises information about, for each end user of the system, which personal data within the end users personal profiles that should be accessible by which application, and/or vice versa, which data should not be accessible etc. In one implementation the personal protection profiles are assigned one of a given number of security levels, the lowest level e.g. indicating that all personal profile data should be inaccessible to every application, the highest level for example indicating that all personal profile data should be freely available, particularly with due regard to applicable laws and regulations. Of course a number of alternative ways of indicating which data should be accessible by whom etc. are possible, the main thing being that it is end user controlled and easily settable and update-able by the end user himself, so that end user in an uncomplicated manner is able to control who should get access to which personal data.

Particularly each application and the respective, thereto belonging, access means are interconnected over an interface, an Application Programmable Interface (API) based on a generic markup language. In a most advantageous implementation the generic markup language is XML (Extensible Markup Language).

In a preferred implementation access to requested end user personal profile data, i.e. data within an end user personal profile, is granted/rejected by the central server in communication with the requesting application. In an alternative implementation access to requested end user personal profile data is granted/rejected by the central server means in communication with the information providing application. In still another implementation, e.g. in case the access means of the requesting application cannot be trusted, access to requested data may be granted/rejected by the central server means in communication with both the requesting application and the information providing application. This, however, is somewhat inefficient in that additional encryption/decryption steps are required, as well as additional transmissions are necessitated. In a particular implementation (first) user identity translating or encrypting means are provided at least in the central server means. Further (second) identity translating means may alternatively also be provided in the access means of the requesting application and/or the information providing application. A first validation of the request may, according to the most preferred embodiment, wherein only the access means of the requesting application is in communication with the central server means, be carried out in the access means of the requesting application. However, a further validation is also performed in the access means of the information providing application relating to its communication with a database holding the information being the object of the access request.

According to the invention particularly each service offered by the system to information-requesting applications is assigned a unique DTD (Document Type Definition). The DTD can be said to consist of rules controlling the communication between e.g. a requesting side and a providing side by defining which data that is allowed to be transferred between the two parts or sides, and the associated data to be transferred.

Each information-providing application will agree with the central server means on a "general DTD". This embodies the maximum number of data fields the information-providing party will release. Specific end uses may, by interacting with the central server means, create user-specific DTDs and thereby reduce the data allowed to be released pertaining to their IDs. Furthermore, the central server means offers "general DTDs" to information-requesting applications to describe what a particular service offers, prior to any end user-specified reductions of data to be released.

In a most preferred implementation a request for access to end user profile data is transported from the requesting application to its access means using RMI (Remote Method Invocation) whereby the request is transported as an XML transport object (in an XML node tree container) tagged with information about the requested end user personal profile data. Information between an access means and an application can alternatively be sent e.g. as an XML string. Instead of RMI may e.g. CORBA^{™} or SOAP be used. For communication between the access means of the requesting/information providing application respectively, and the central server means, is particularly the HTTPS protocol (Hypertext Transfer Protocol Secure) used. XML SOAP, CORBA^{™} etc. may alternatively be used.

In a preferred implementation the request is digitally signed by the access means of the requesting application (with a private key of the access means) and/or by the access means (a private key thereof) of the information providing application. Preferably it is also signed by the central server means using a private key thereof. In a most preferred implementation the request, when having been communicated to the central server, which responds with an end user-specific DTD, is validated by the access means of the information-providing application. In an alternative implementation it is validated by the access means of the information requesting application. (The preferred place to validate a request depends on business circumstances. For example, if information-providing applications require payments for communicating with their access means, information-requesting applications might prefer to validate the request prior to communicating with the information-providing party. Furthermore, a reason for emphasizing validation in the information-providing application's access means is the eliminated risk of unauthorized release of data due to a "hacked" access means belonging to the information-requesting application.)

Digital signing at an access means (and in the central server means) may be optional, e.g. if the security is considered to be sufficient since the communication or exchange of information takes place within a network controlled by one and the same operator, or if the data need not be protected. Digital signing procedures are controlled by the central server means, and to which extent digital signing is to be implemented, and where, is thus end user controlled.

Particularly the central server means encrypts the user identity for the requested information used by the information providing application. In addition, or alternatively, in other, preferred, implementations, encryption of the user id used by the requesting application is performed.

In an advantageous implementation the system includes a cache memory associated with each application respectively, for temporarily holding information about access requests, such that a previously used session can be reused, at least for a given time period. It should be clear that each access means is associated with a database or similar, particularly a proprietary database holding for example general DTD information and address information. The information providing application generally does not hold the information but fetches it from an information holder, e.g. a service/content/information provider or a database.

To solve one or more of the problems initially referred to the invention also suggests a personal profile data access control network for controlling the Access to personal profile data. The network comprises at least one central protection server means, comprising or communicating with information holding means for holding personal protection profile information, and a number of distributed access means, e.g. software modules, at least one access means respectively interfacing each of a number of applications. The central protection server means comprises means for translating and verifying identities. A request for access to personal profile data by a requesting application is communicated to the access means of the requesting application and it is granted/rejected by the central server means in communication with the access means of the requesting application and/or the established information providing application. The identity of the requesting application is concealed from the information providing application and vice versa. The interface between an application and the respective access means is based on a generic markup language, which advantageously is XML. Particularly the, with the central server means, associated information holding means contains personal protection profiles for each end user registered with the system, and the personal protection files are end user controlled. Preferably the central server means and the access means of the requesting/information providing applications digitally sign the requests for personal profile data with their respective private keys, and the digital signatures are verified by the control logic of the central server means and the access means respectively using the respective corresponding public key.

The invention also suggests a method of controlling access to personal data within personal end user profiles in a data communication network, running a number of applications, and comprising or communicating with information/content/service providers. The inventive method includes the steps of; providing an access request from a requesting application to an access means associated with the requesting application using a generic mark-up language, e.g. XML; forwarding the request from said access means to a central server means with information holding means holding personal protection profiles for the end users of the system; performing user identification translations/encryptions such that the user identification of the requesting application will be concealed for the information providing application and vice versa; establishing, by using the request and the personal protection profile, whether access is to be granted or rejected; if access to the requested personal profile data is to be granted; confirming to the access means of the requesting application that access is to be granted; validating the response to the request sent to the central server means; transmitting the translated (encrypted), preferably digitally signed, request to the access means of the information providing application.

The request of a requesting application particularly relates to getting access to data in (fetching data from or setting data in) a personal profile, and, the method particularly further may comprise the step of; using a third party controlled data communication network, e.g. Internet or another IP-based network, for communication between the requesting application and the information providing application, particularly using e.g. the HTTPS protocol.

Preferably the method includes the step of digitally signing the request in the access means of the requesting application before sending it to the central server means; performing an encryption of the user identity used by the information providing application in the central server means, signing the request in the central server means; validating the response to the request in the access means of the requested application; digitally signing the request in the access means; decrypting the user identity used by the information providing application in the access means of the information providing application, and digitally signing the request; transferring the request to the information providing application; accessing the requested data and signing the response in the information providing application; transmitting the requested data, if applicable, to the access means of the information providing application; digitally signing the requested information; sending the access granted information to the access means of the requesting application over the third party controlled data communication network using e.g. HTTPS; digitally signing the information message in the access means of the requesting application; sending the requested information data to the requesting application (e.g. using RMI). If data is to be set in a personal profile, it is instead the response to the request that is returned to the requesting application.

### BRIEF DESCRIPTION OF THE DRAWINGS

The invention will in the following be more thoroughly described, in a non-limiting manner, and with reference to the accompanying drawings, in which:
- Fig. 1: is a schematical block diagram describing a state of the art system,
- Fig. 2: very schematically illustrates the personal profile data protection network in communication with applications, providers etc.,
- Fig. 3: is an illustration of a system allowing end user protection of personal profile data according to the invention,
- Fig. 4: schematically illustrates a specific implementation of a system as in Fig. 3,
- Fig. 5: schematically illustrates an alternative embodiment implementing a cache functionality,
- Fig. 6: schematically illustrates a further alternative implementation of a system according to the invention,
- Fig. 7: is a flow diagram describing one implementation of the concept when data within a personal profile is requested via a requesting application,
- Fig. 8: is a simplified flow diagram illustrating an implementation with a cache, as described in Fig. 5,
- Fig. 9: is a flow diagram illustrating one particular embodiment according to which the user identity should not be recognized by the requesting application,
- Fig. 10: is a flow diagram describing an alternative implementation when the user identity should not be recognized by the requesting application,
- Fig. 11: is a flow diagram schematically illustrating the central server means updating the distributed access means, and
- Fig. 12: is a flow diagram describing end user setting of a personal protection profile in a central server means.

### DETAILED DESCRIPTION OF THE INVENTION

The state of the art solution as schematically indicated in Fig. 1 has already been discussed earlier in the application under the section "State of the art" and will therefore not be further described herein.

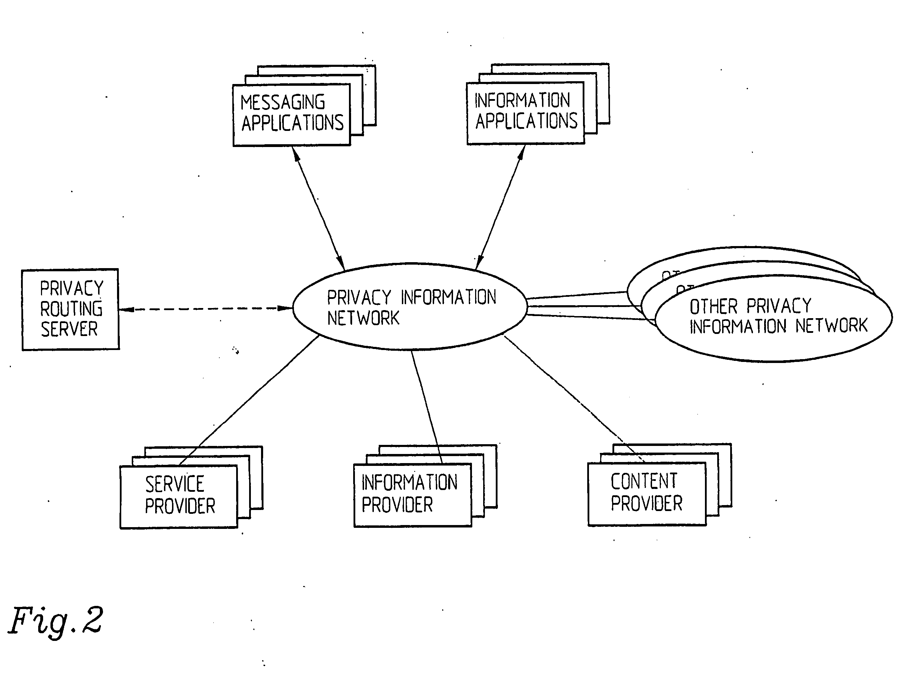

Fig. 2 is a schematical illustration of a personal profile protection network or privacy information network. According to the invention different information applications can be connected with several service/information/content providers including privacy protection and dynamic information routing. Through the personal profile protection network applications, information providers, service providers, content providers and other privacy information networks are interconnected, making it possible to connect in any appropriate manner requesting applications with information providing applications or providers, without the applications having to know the addresses of each other. Large personal profile protection networks can be built on for example Internet, Mobile Internet or any private IP based WAN (Wide Area Network).

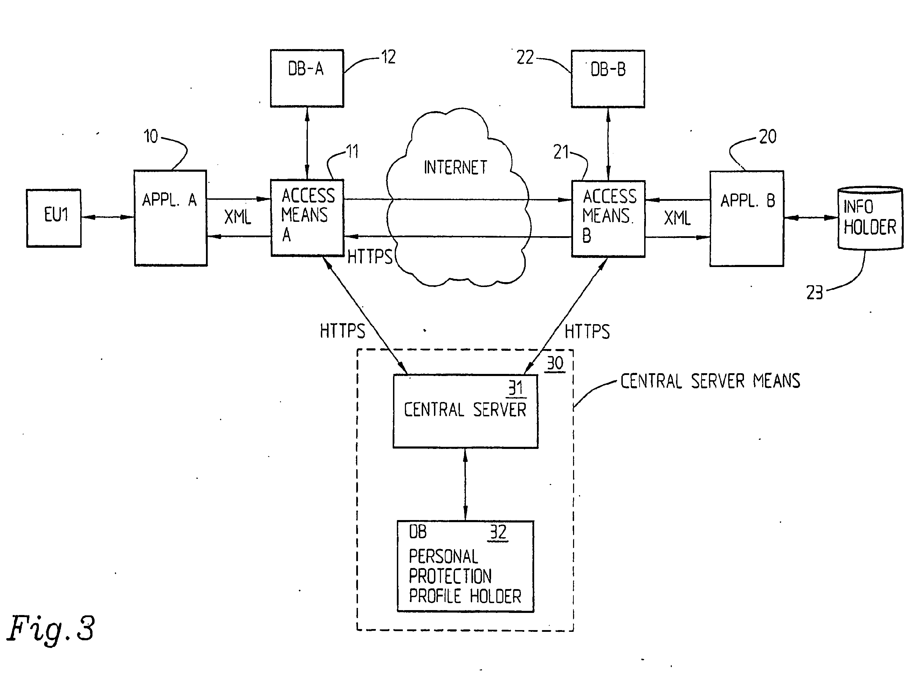

Fig. 3 shows one example of a system according to the invention. The system includes an application A 10 with access means A 11 and an application B 20 with access means B 21. Each access means 11, 21 communicates with a database, DBA 12 and DBB 22 respectively. The access means 11, 21 form part of the personal profile data protection network and communicate with a central server means 30 comprising a central server 31 and a database 32 holding personal protection profile information.

The access means interfacing an application may comprise one single, or two, or more access means, or even a cluster of access means, for example depending on redundancy and load sharing requirements on the application site.

The central server means handles or controls the information routing and personal profile data locking/unlocking. Of course a personal profile data control network may comprise more than one central server means and a plurality of (singular or multiple) access means, but for reasons of clarity only two access means, one for each application, and one central server means are illustrated in the figure. For redundancy there may also, or alternatively, be more than one central server at a site, or at multiple sites. There may also be at least duplicate information holding means associated with a central server.

It is here supposed that application A 10 is the requesting application, here communicating with end user EU 1 and it may for example request access to personal profile data located anywhere in the network, either for the purpose of fetching the data, or for the purpose of setting new data in the personal profile. Both getting and setting (pull and push) of data is covered by the inventive concept, and the functioning is in principle similar.

It is here further supposed that the application B 20 is an information providing application that finds the data in information holding database 23.

In the databases 12,22 of the access means 11,21, information is contained about which is the central server that handles the DTDs needed for the communication between information requesting and information providing applications, and the databases 12,22 do also contain the address, e.g. IP number based URL:s (Uniform Resource Locator) of the (appropriate) central server means.

The access means A 11 does not know where to send the request received from application A 10. Access means A 11 is interfaced with application A 10 over an XML object based API (Application Programming Interface). Preferably each application uses RMI (Remote Method Invocation) for communication with its respective access means. For communication between an access means and the central server means e.g. HTTPS is used. Access means belonging to different applications also communicate using HTTPS e.g. over Internet or another IP based communication network.

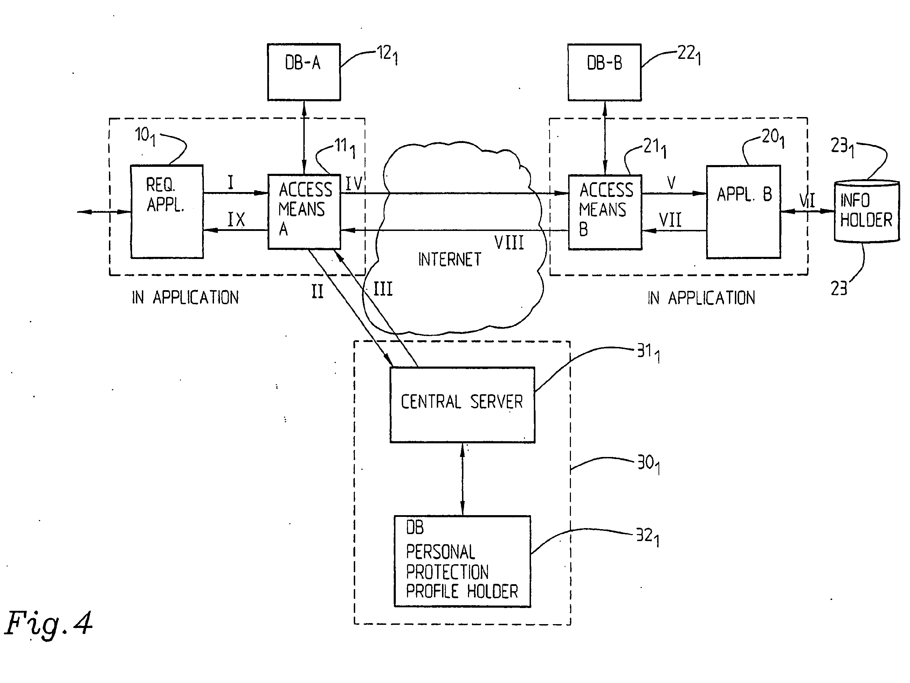

This figure does not show in detail how the communication is carried out, but it illustrates a general system that can be used in different ways. In one implementation, however, (cf. also Fig. 4) application A 10 sends a request for personal profile data to its access means 11 using XML objects or text. Access means 11 does not know what to do with the request and questions its database DB A 12 to find out the address of the central server means to which the request should be forwarded. Via HTTPS the request is forwarded to the central server 31 which establishes, using database 32 containing personal protection profiles whether the access request should be allowed or not, i.e. whether the data may be accessed or not by the particular requesting application. An indication of a rejection or a grant of the access is returned to access means A 11, which in case of grant, then uses HTTPS for communication with access means B 21, which in turn validates the request and, if the validation was successful, requests application B 20 to access to the data, which in turn accesses the data in information holder 23. Subsequently information is returned to application A 10 via access means B 21 of application B 20, over Internet to access means A 11. In access means B 21 may optionally a manipulation or modification of returned data from application B 20 be performed.

The communication with the central server means may alternatively be performed exclusively via access means B 21. It should be clear that each access means can be used in a similar manner independently of whether the interfaced application acts as an information requesting application or as an information providing application.

The used XML object based API can easily be interfaced without requiring protocol conversions, and it is based on information level communication which does not expose the implementational details between involved elements. Every new type of information service that is needed only needs a new DTD for the information that has to be transported, which provides a standard way to allow for integration between information products, having as a result that different applications do not have to implement new APIs for different types or formats of information to be transferred, instead the DTD is changed or replaced.

A fundamental characteristic of the system according to the invention is that access rights to personal information are administrated by the end user at a central location, i.e. at the central server means, whereas the personal profile data, i.e. the information as such, is distributed throughout the communication system or communication network on different sources. One reason therefore is that it is not really plausible to keep all personal information at one and the same location. Another reason is that personal data can be highly dynamic, an example thereon is the position of a user in a mobile network. Another example relates to the balances of user's check accounts which can also vary rapidly. It also facilitates for an end user to protect the personal data in an environment with a large number of information requesters and a large number of information providers, and therefore it has been found that it is extremely advantageous to provide the end user with a central facility where the end user can lock/unlock, i.e. customize access to, personal information from different providers and to different information requesters.

According to the invention an information requesting application does not know the identity of an information providing application or information holding means and vice versa. The only way to send personal profile data from an information holding side to an information requesting side is by translating the identities, preferably in the central server. This means that there will be no connection between personal information from different locations without going through the user controlled central server means. By having the personal profile data or information spread out at different locations, or at the same location but unrelated, with different user identities, the result will be that mining of the end user privacy is not possible. The central server means only holds information about which personal data that is locked and unlocked respectively, it does not "own" the actual information.

With reference to Fig. 4 an advantageous implementation will be more thoroughly described. It is supposed that an information requesting application 10₁ wants to pull (get) information from an information providing application 20₁ without knowing where to find the information itself. In this implementation it is supposed that communication with the central server means is provided by the access means 11, interfacing the requesting application 10₁. The advantage of such an implementation is that a fast preliminary response is obtained from the privacy network, i.e. from the central server means 30₁, as to whether the requested transaction is possible, without even having to involve the access means 21₁ of the information providing application 20₁ (or the information providing application itself). The load resulting from rejected transactions on the access means 21₁ on the information providing side will thus be considerably reduced as compared to a case when the providing side is involved at an early stage.

Thus, when the information requesting application 10₁ wants to set information in, or get information from, an information provider, or holder, the requesting application 10₁ makes a request towards "its" access means 11₁. The requesting application does not know the address to the information provider. It is further supposed that access means 11₁ holds a public key and a private key. The private key PKI (Private Key Infrastructure) of a node may e.g. be stored as a key object, e.g. a secured object file.

In a particular implementation the request is sent over RMI, and it preferably contains:
- the user identity (ID) associated with the request and used by the requesting application,
- a DTD ID (equivalent of a service ID),
- a Transaction ID,
- an ID of the Requesting Application,
- a Gateway ID, and
- an XML Node Tree Container.

The XML Node Tree Container contains an XML node tree tagged with which information the requesting application wants to get or in which personal data fields he wants to set data, update data etc. The tagged XML node tree may e.g. be described as a form, an XML node tree form.

The XML Node Tree Container is an object for transportation of the XML Node Tree between the requesting application and its access means 11₁. I indicates a request from the requesting application 10₁ to the access means 11₁. Access means 11₁ finds the general DTD - i.e. a DTD not yet tailored to specific end user preferences on the transfer of personal data, the general XSLT file, the Public Key of the central server means, DNS (Domain Name Server) names and IP addresses (one or more IP number based URLs in order from the main central server means for the DTD ID, in case there are more than one central server means).

In one implementation it may be an option to look up a specific central server means ID, if it is specified in the database (DB-A 12) with a specific central server means public key. This may be used when the central server means is not one in the cluster with the same public key, but e.g. one which uses the same domain name. The relevant information for central server means ID, DTD information etc. is fetched by the access means 11₁ from the associated database 12₁.

The access means 11₁ of the requesting application 10₁ then sends the request on, II, to the central server means 30₁ to find the specific DTD for this particular service and end user ID. Particularly HTTPS is used, and the request particularly comprises:
- the identity of the requesting application access means 11₁,
- the digital signature of the requesting application access means with its private key,
- the end user ID used by the requesting application 10₁,
- the DTD ID (equivalent of a service ID),
- the Transaction ID,
- the Gateway ID, and
- the requesting application ID.

A response is then awaited and expected from the central server means 30₁. In the meantime, while awaiting the response, the requesting application access means 11₁ optionally validates the XML node tree with the general DTD for the DTD ID (service ID). This constitutes a basic validation and it is done the first time the DTD ID is used, from the time that the server is up and running in order to limit the load on the requesting application access means 11₁.

The central server 31₁ comprising control logic, checks the authentication of the request with the identity of the access means, the IP address (optionally) and the digital signature against the public key of the access means 11₁. The requesting application user ID and the DTD ID are then mapped onto the information providing application user ID. It should be noted that the user identity used by a requesting application can be, or normally is, different from the user identity used by an information providing application. Further, the user identification used by an application is not the identification of the application.

The information providing application 20₁ user ID is encrypted with date/time using the public key of the access means 21₁ of the information providing application 20₁, such that it only can be read and understood by the information providing application access means 21₁. The encrypted pattern should be different every time the access means 11₁ of the requesting application 10₁ makes a request. The central server 31₁ gets a digital signature for the end user specific DTD from the database holding protection profile information 32₁, signed with the private key of the central server means 31₁. To obtain a good performance, DTDs may be signed in advance. "Out of band" information elements are also signed. (By "out of band" information is here meant the systems level communication layer, e.g. including control information for the access means. This can e.g. be implemented as HTTP POST in the forward direction and as a cookie in the backward direction.)

The central server means 31₁ then, III, returns messages to the requesting application access means 11₁ containing the end user specific DTD as in band information. (By "in band" is here meant information at the application data communication layer, e.g. at XML document level.) The central server means 31₁ also returns "out of band" information such as:
- the digital signature of the end user specific DTD,
- the digital signature of the central server means "out of band" information,
- the identity of the central server means,
- the encrypted end user ID, i.e. the information providing application end user ID,
- time to live,
- inactivity time,
- response time,
- the domain name of the access means 21₁ of the information providing application 20₁,
- its IP address, and
- the public keys of the respective access means 11₁, 21₁.

The transaction ID from the requesting application 10₁ (via its access means 11₁), the user ID of the requesting application, and the encrypted user ID of the information providing application will be logged in the central server means 30₁.

In the access means 11₁ of the requesting application 10₁, the digital signature of the central server means 31₁, with its public key, is authenticated. The requesting access means 11₁ will perform a transformation of the XML node tree to an XML transport file with the general XSLT file (the XSLT file for that particular DTD ID) (XSL Transformation; XSL is e.g. described in XSL Transformations (XSLT) Version 1.0, W3C Rec. dated 10 November 1999 and XSL Transformations (XSLT) Version 1.1 W3C Working draft, 12 December 2000, which documents herewith are incorporated herein by reference).

The requesting application access means 11₁ optionally validates the received end user specific DTD against the XML transport file. Next the XML-file will be signed. If there is a request for something, via an XML attribute, for which access is not allowed, an error message will be returned to the requesting application 10₁ by one of the access means.

If however the validation can be completed without errors, the requesting application access means 11₁ sends, to the access means 21 of the information providing application, IV,:
- the XML transport file (as in band information) and out of band information, e.g. in the form of a Cookie, i.e. the digital signature for the XML transport file with the private key of the access means 11₁,
- the digital signature of the out of band information from the central server means 30₁, which means the server ID,
- encrypted end user ID (user ID of the information providing application),
- time to live,
- inactivity time,
- response time,
- the validation of the information providing side,
- DTD ID, and
- the public keys of respective access means 11₁, 21₁.

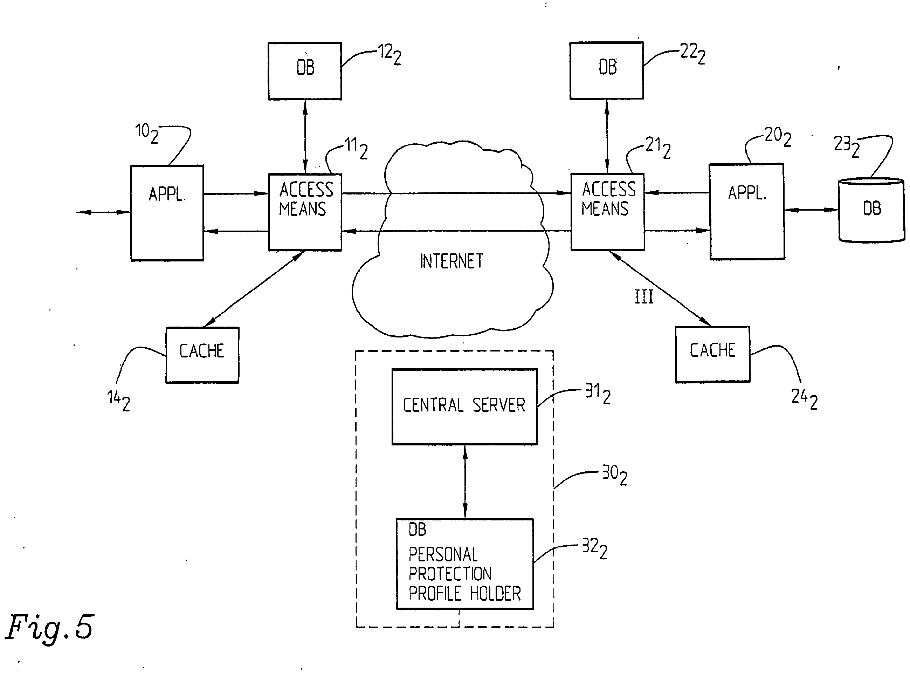

In one implementation, particularly discussed with reference to Fig. 5, implementing caches in association with the respective access means, a session ID of the information providing side can be included as well. If, however, there is no session, the session ID will be zero.

The requesting application access means 11₁ here uses HTTPS for communication with the access means of the information providing side, (IV). Next, the requesting application access means 11₁ will add the end user specific DTD into the XML transport file.

If the requesting application access means 11₁ does not receive any response from the access means 21₁ of the information providing application within a predetermined time interval, out of band information from the central server, the requesting application access means 11₁ will disconnect the (TCP; Transmission Control Protocol) connection. It will also empty the session data after a predetermined number of attempts to get a response from one and the same access means on the information providing side. Possibly it will be done after one or more attempts on other access means of the information providing application, in case there is for example a cluster, multiple access means or duplicated access means or similar.

When the information providing application access means 21₁ receives the request, (IV), it retrieves, using the DTD ID:
- the public key of the central server,
- the ID of the central server and the general DTD, and,
- the general XSLT file for the particular DTD ID from its database 22₁.

The digital signature by the requesting side access means 11₁ of the XML transport file is verified against the public key of the requesting side access means from out of band information, DTD ID, central server ID and central server 31₁ signature of the out of band information against the database 22₁. The XML request is validated against the end user-specific DTD from the central server 31₁. If the request is invalid, an error message is returned to the access means 11₁. If the request is valid, the information providing side user ID is decrypted. If the session on the providing side is still active, or ongoing as given by the out of band information, then there is no need for a decryption of the information providing side user ID, since the session is still alive in a decrypted form. The XML file is then parsed to an XML node tree and, here, information providing application 20₁' is invoked by sending the XML node tree container, a generated transaction ID, ID of the DTD over RMI. Every new DTD ID may be validated by the information providing side access means 21₁ against the general DTD each time the server is activated. This general DTD represents the maximum data elements the information providing application is prepared to release - or to have modified, in the "push" case.

For the particular session, and in communication with the information providing application 20₁, the access means 21₁ will use the out of band parameter time to live (or inactivity time), V.

The information providing application 20₁ then checks what information should be get or set from the XML node tree form and sends a response, VII, to the corresponding access means 21₁ containing an XML node tree filled with the requested information, and also information about completion status. The XML node tree is returned from the information providing application 20₁, after fetching information, VI, from information holder 23, back to the respective access means 21₁ in an XML node tree container.

The information providing application access means 21₁ then transforms the XML node tree received from the application 20₁ to an XML transport file with the general XSLT file for that DTD ID. An answer is then sent over HTTPS with the new XML transport return file to the access means 11₁ of the requesting application 10₁, VIII.

If, however, there was no response from the information providing application, i.e. if the defined time period, within which a response should be provided, has lapsed, corresponding to out of band information from the central server, the access means 21₁ on the information providing side sends a reasoned notification back to the access means 11₁ of the requesting side. A reasoned notification or an error message, either from the access means on the providing side or from the information providing application, should be sent as out of band information back towards the access means of the requesting application as a cookie with data from the access means on the information providing side. For a successful request, there will be no error message in the cookie.

If the requesting side access means 11₁ disconnects the TCP connection to the information providing side access means 21₁, it will have as a result that the providing side access means 21₁ disconnects the connection with the information providing application 20₁ in a controlled manner.

As the access means 11₁ on the requesting side receives the XML transport file, it parses it to an XML node tree. It returns the XML node tree in the XML node tree container with session ID and possible error messages, if there are any, to the requesting application 10₁, IX. If a cache is implemented, as schematically illustrated in Fig. 5, a session or object data can be stored into said cache for a given time period, and the XML node tree container with the session ID can be reused for the subsequent request for the same session as long as the relevant information is still stored in the cache.

As already has been indicated above, for in band information an XML file is used between the respective access means, and DTDs are sent from the central server means towards the respective access means over HTTP with SSL (Socket Secure Layer).

For out of band information from the respective access means towards the central server means 31₁ preferably HTTP (SSL) body is used, and for an out of band information response from the central server means, preferably a cookie, or some other information field, is used.

In a particular implementation all transaction ID:s from the requesting application with providing side user ID are logged in a log file in the access means on the requesting side. Preferably the logging can be turned on or off. Similarly all transaction ID:s which are generated by the access means on the providing side with encrypted user ID:s of the providing side can be logged in the access means on the providing side. Preferably also this logging is can be turned on or off.

An access means is according to the invention able to act both as an access means for a requesting side and for an information providing side, i.e. the access means are similar and provide the relevant functionality in acting in the requesting procedures as well as in the providing procedures.

In a particular embodiment the requested information may comprise one or more binary attachments.

In one implementation an attached password may optionally be enclosed which is used with the providing side user identification to allow access by any user providing this password.

Fig. 5 illustrates an implementation with caching of sessions. The functioning is in principle similar to that described with reference to Fig. 4. It is illustrated how the requesting application 10₂ communicates with the requesting side access means 11₂, which fetches information from, or accesses information in, an associated database 12₂ as described above, and session information in cache 14₂. In a similar manner, at the information providing side, an application 20₂ communicates with access means 21₂ associated with a database 22₂ and a cache 24₂. The figure also illustrates the central server means 30₂, i.e. central server 31₂ and protection profile holding database 32₂.

It is here supposed that the requesting application 10₂ makes a request for a user in a non-timed out session. Steps II, III, (cf. Fig. 4) are then omitted, and the access means 21₂ of the providing side continues to request the information from the information providing application 20₂. At the requesting side, the returned XML node tree container from access means 11₂ can be reused for the subsequent request for the same session. Since the XML node tree container contains a session ID, the access means 11₂ on the requesting side will reuse the same session. The returned XML node tree container advantageously also contains status messages and returned XML node tree. If there are more than one access means, e.g. for reasons of redundancy, and an application wants to reuse existing session data from an earlier invocation by the application, the application generally has to access the same access means within the cluster, using the same session ID as it used at the preceding invocation.

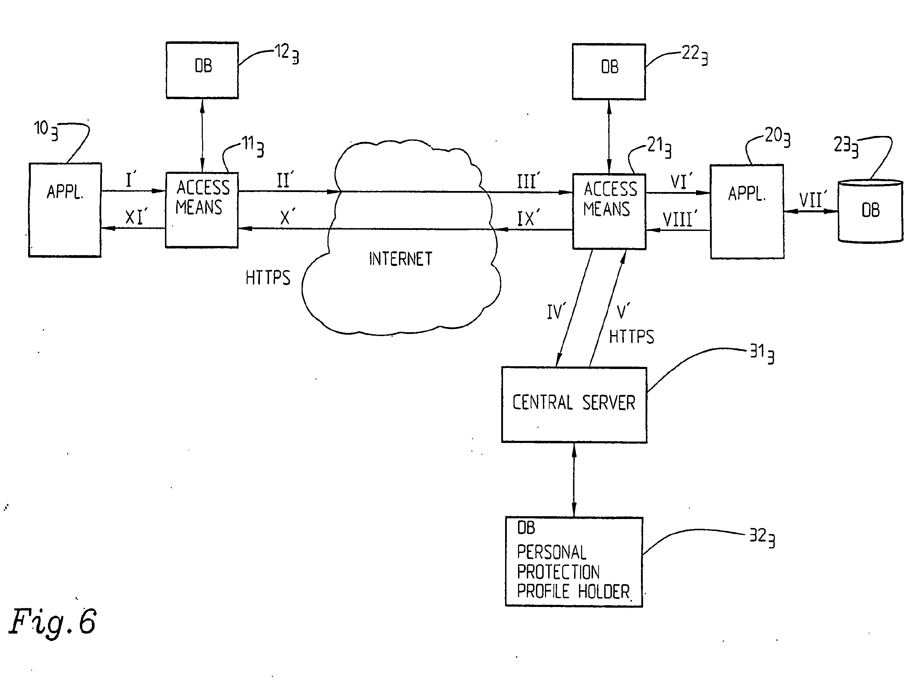

With reference to Fig. 6 an alternative implementation is illustrated in which the information providing side handles the communication, via its access means 21₃, with the central server means, i.e. the central server 31₃. Such an implementation could however produce an increased load on the information providing side in case of rejected requests, as compared to the embodiments discussed above. (Also here may of course reuse of session ID be implemented.)

It is supposed that requesting application 10₃ makes a request for user information to its access means 11₃, I'. The access means 11₃ encrypts the user ID used by the requesting application and a random number with the private key of the central server 31₃ to assure that it will only be understandable to the central server 31₃. Requesting side access means 11₃ then signs the user ID and the XML node tree, as discussed above with reference to Fig. 4, with the private key of the access means. The request is then sent to the access means 21₃ of the providing side over Internet (or other IP-network), HTTPS, II', III'. Subsequently the request is received on the providing side access means 21₃, which signs the request and sends it to the central server 31₃, IV', for decryption.

The central server 31₃ in communication with the database holding personal protection profiles 32₃, checks the signatures of the respective access means and decrypts the user ID. The providing side user ID is looked up and it is established to which extent the requested access is allowable, i.e. user information can be accessed by the requesting application according to the personal protection profile of the user stored in the database. The request is updated with the access rights, e.g. request granted (e.g. to limited extent) or denied etc., and the response is returned to the providing side access means 21₃, V', using HTTPS. It is here, however, supposed that the access request was granted.

The providing side access means 21₃ then sends a query, VI', to the information providing application 20₃ for the information that was authorized by the central server 31₃. In communication with the database information holder, VII', the information providing application 20₃ returns the information to the access means 21₃, VIII'. The providing side access means 21₃ then returns the authorized information towards the requesting side using the HTTPS session, IX', X'. The authorized information is then received by the requesting side access means 11₃, which returns the information requested by the requesting application that was authorized, XI'. Instead of fetching information for example from the database or information holder DB 23₃, data can also be set in for example DB 23₃, the functioning will in principle be the same, but information would then be provided to the "providing" application instead of requested therefrom.

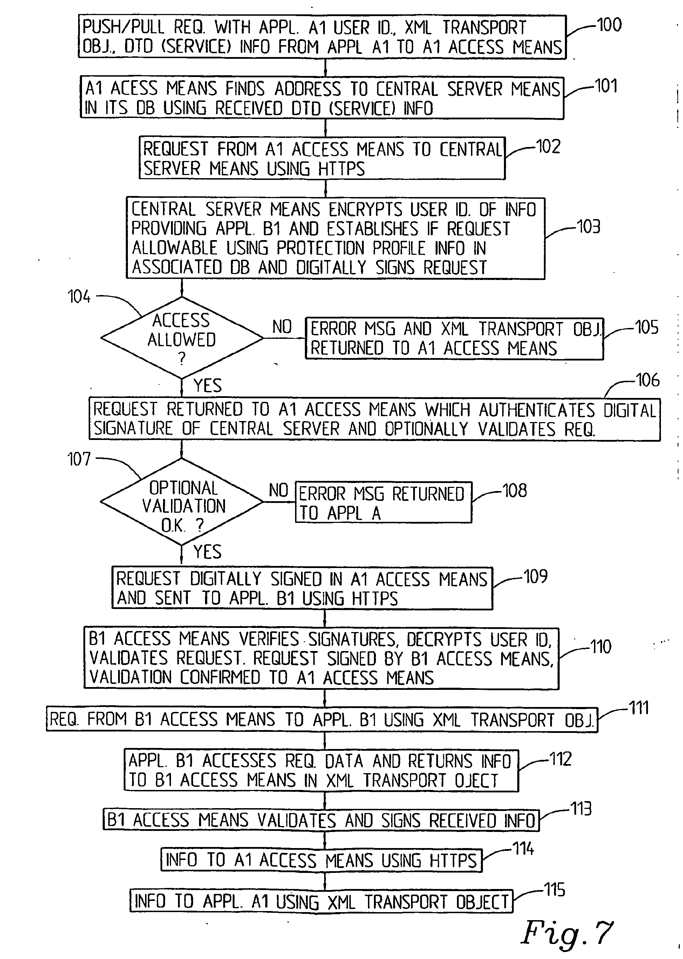

Fig. 7 is a somewhat generalized flow diagram describing the steps of the procedure illustrated with reference to the block diagram of Fig. 4. The requesting application is here denoted A1 and the information providing application is denoted B1.

It is supposed that a push/pull request (i.e. a request to set or get data) with A1 user ID, XML transport object, DTD information etc. is sent from requesting application A1 to A1 access means, 100. A1 does not know who the receiver is, A1 only has knowledge about the relevant DTD. Particularly RMI is used and the request comprises an XML node tree transported in a container.

The access means A1 finds the address to the central server means in its associated database, using the received information about the DTD, which means that it finds the URL in the database to the appropriate central server means. In the database all relevant DTD. are contained. A1 access means subsequently signs in band and out of band data, and sends it to the central server means using e.g. HTTPS, 102. The central server means then finds the user ID of the information providing application B1, encrypts the B1 user ID, and examines if the request should be allowed using protection profile information in the associated database, which is signed, and subsequently digitally signs the request (if allowed), 103.

It is thus established if access is allowed, 104. If not, an error message is returned to A1 access means, 105. If however access is granted to all requested data, or to some of the requested data, the request is returned to A1 access means which authenticates the digital signature of the central server and optionally validates the request, 106. If the optional validation, 107, is not successful, an error message is returned to application A1, 108. If on the other hand, the optional validation is successful, the request is digitally signed in A1 access means and sent to application B1, using e.g. HTTPS, 109.

In B1 access means the user ID is decrypted, the digital signatures of the access means A1 and of the central server means are verified, and the request is validated. The request is subsequently signed by B1 access means and a confirmation of the validation is provided to the access means A1, 110. The signed request is then forwarded from B1 access means to application B1 using an XML transport object over RMI, 111. Application B1 accesses the requested data and returns the requested information to B1 access means in an XML transport object, 112, (data may also be set within the requested personal profile, in an alternative implementation). (If there was no response from the information holding means holding the requested personal profile data in time, an error message is instead returned.) Subsequently the B1 access means validates the XML transport file and signs the information received from application B1, 113. When application B1 accesses the requested data, it is performed e.g. by converting the request to a database call and for example by checking a filled in note or form, or contacts another node/application for information.

B1 access means sends the information, after duly digitally signing it, to A1 access means using HTTPS, 114. The object has then been converted to an XML transport file, and in A1 access means it is converted to an object tree, which is sent to application A1 over RMI using an XML transport object (XML node tree container), 115.

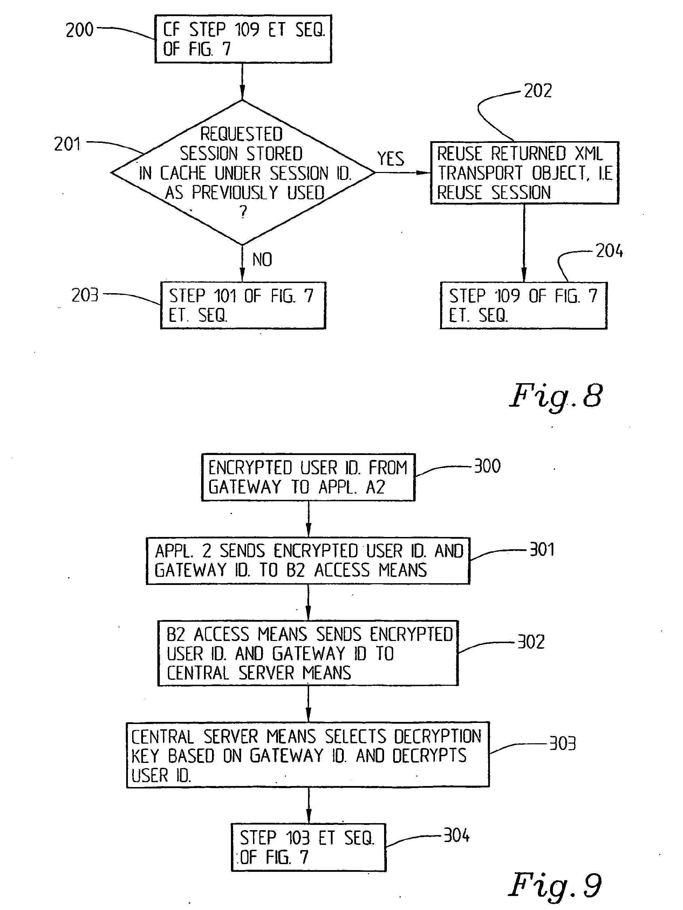

Fig. 8 is a very simplified flow diagram illustrating how a cache can be implemented in association with the respective access means for storing of session related information. The first step, 200, corresponds to step 100 of Fig. 7. Then it is established if the requested session and the session ID of the requested session are stored in the cache as previously used, 201, which in practice means that the access means of B1 has cached the encrypted user ID of application A1. If yes, the returned XML transport object is reused, in other terms, the session is reused, 202. Then it is proceeded with step 109 of Fig. 7 cf. seq., 204. If however there was no session stored in the cache, it is proceeded with step 101 of Fig. 7 etc., 203.

Fig. 9 is a flow diagram schematically illustrating an embodiment in which the requesting application, herein denoted A2, is not trusted, i.e. when the user ID should not be recognized by application A2. The gateway of application A2 then uses an encrypted user ID. In a first step, an encrypted user ID is sent from the gateway to application A2, 300. Optionally the user ID may contain a time stamp to assure that the encrypted ID is different each time A2 is contacted by the gateway. Application A2 sends the encrypted user ID and the gateway ID to the access means of the application A2, 301. A2 access means subsequently sends the encrypted user ID and the gateway ID to the central server means, 302. The central server means selects a decryption key based on gateway ID and decrypts the user ID, 303. It is subsequently proceeded with steps 103 through 115 of Fig. 7, 304.

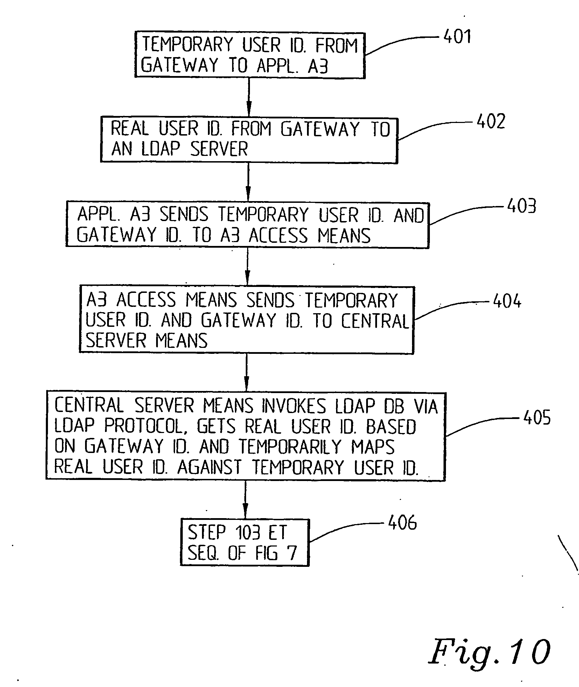

In Fig. 10 an alternative implementation is illustrated for a case when the requesting application A3 is not trusted, and when the user ID should not be recognized by A3. In this implementation the gateway of application A3 uses a temporary user ID. Thus, temporary user ID is sent from the gateway to application A3, 401. The gateway also sends the real user ID to an LDAP (Lightweight Directory Access Protocol) server, 402, with a possibility to map to the temporary user ID. Application A3 sends the temporary user ID and the gateway ID to A3 access means, 403, (c.f. steps 100, 101, 102 of Fig. 7). A3 access means sends the temporary user ID and the gateway ID to the central server means, 404. Thereupon the central server means invokes the LDAP database via the LDAP protocol, gets the real user ID based on gateway ID and temporarily maps the real user ID onto the temporary user ID, 405. The steps III - IX of Fig. 4 then proceed without modification, substantially corresponding to step 103 et. seq. of Fig. 7, 406. Through these implementations support is provided for not trusted applications, such as when an encrypted user ID from a WAP (Wireless Application Protocol) gateway, for mobile Internet applications, is used, or when a temporary user ID from a WAP gateway towards the application, also for mobile Internet applications, is used.

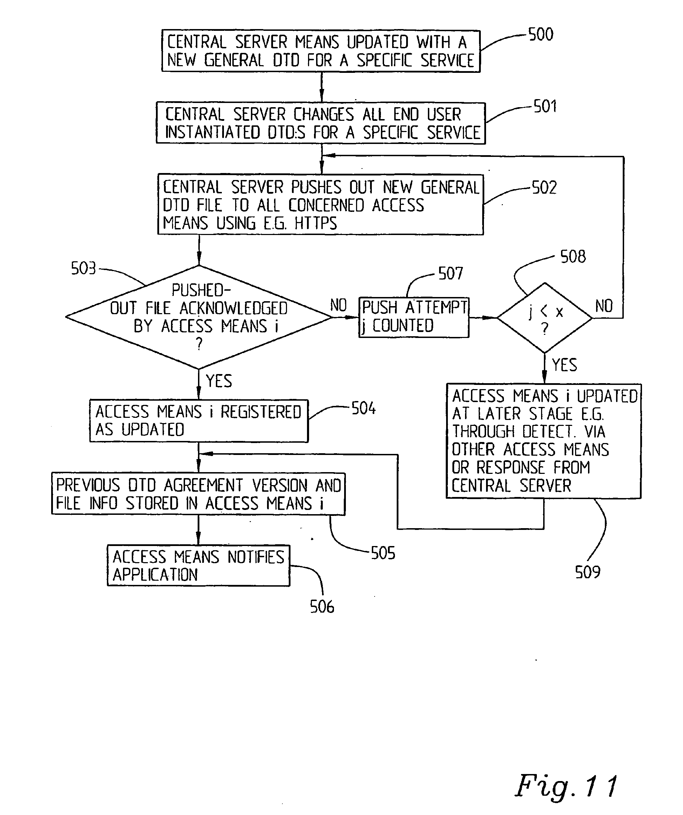

Fig. 11 illustrates a procedure when the access means are updated by the central server. It particularly relates to making changes to a DTD. It is here supposed that the central server means is updated with a new general DTD for a DTD ID, 500. The central server means updates its database holding personal protection profile data etc. Then the central server changes all end user specific DTDs for the DTD (i.e. service) with a given ID, 501. The central server pushes out the new general DTD file (signed) to all concerned access means using e.g. HTTPS, 502. The information contained in the DTD file comprises the general DTD version, DTD ID and the time when the DTD will become valid, signed with the private key of the central server means. It is then established if the pushed out files are acknowledged by access means i, 503. If yes, access means i will be registered as updated, 504. The previous DTD version and file information are stored in access means i, 505, to provide for backwards compatibility. Subsequently access means i notifies the corresponding application to the effect that it has been updated, 506.

It is supposed that a given number, x, of push attempts are allowed, such that if a push j was not acknowledged for access means i, it is examined if push attempt number j is lower than x, 507, 508. If j < x, a new push attempt is tried as from step 502 etc. If however j is equal to x, the access means will be updated at a later stage, e.g. through detection via communication with other access means or by means of a response from the central server, 509. Then it is proceeded with step 505.

Registration of end users can be performed in any appropriate manner.

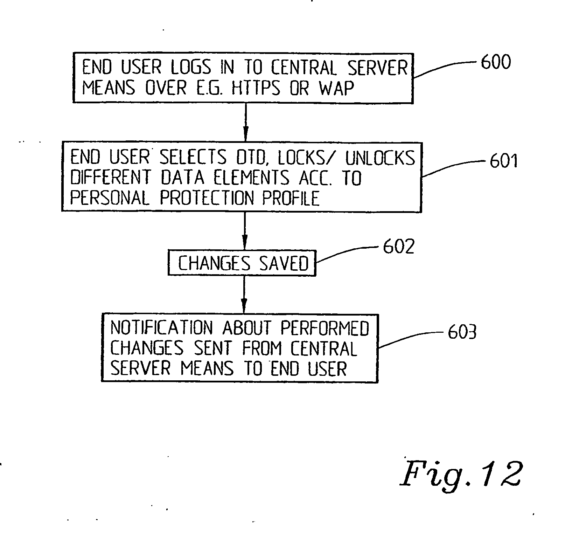

Fig. 12 is a flow diagram illustrating how an end user can control the granting/rejection of access to personal information, i.e. how the end user can control which applications should be granted access or not, and to which data etc.

In the flow diagram of Fig. 12 it is schematically illustrated one example of end user actions that should be performed in order to set a personal protection profile in order to lock and unlock respectively personal information within the personal profiles for different requesters. First it is supposed that the end user logs in to the central server means when connecting to the central server over e.g. HTTPS (it is supposed that the end user is registered in the central server means), 600. Subsequently the end user makes changes or sets up a protection profile by locking and unlocking different data elements. This can be done in many different ways, different protection profiles or profile levels may be predefined, or the selection of locked and unlocked data elements etc. may be performed in a more manual way etc. taking legal requirements into account, which advantageously should be provided for automatically. The (new) "protection profile" is then saved, 602. As a confirmation, and if the end user has selected an option to be notified on changes, the central server sends a notification, 603, over e.g. SMS (Short Message Service) or as an E-mail to the user. As briefly mentioned above, it is also possible to lock or unlock a complete DTD.

It should be clear that the invention of course not is limited to the specifically illustrated embodiments The scope of the invention is defined in the appened claims.

## Claims

1. A system for end user control of the distribution and maintenance of end user personal profile data in a data communications system providing communication between applications (10, 20; 10₁, 20₁; 10₂, 20₂; 10₃, 20₃) comprising and/or communicating with service providers or information providers or content providers or first information holding means (23; 23₁; 23₂; 23₃) holding end user personal profile data, said system comprising a personal profile protection network with at least one central protection server means (30; 30₁; 30₂; 30₃) comprising or communicating with second information holding means (32; 32₁; 32₂; 32₃) holding personal protection profile data comprising personal protection profiles for each end user registered with the system, and a number of distributed access means (11; 21; 11₁; 21₁; 11₂; 21₂; 11₃; 21₃),
**characterized in**
**that** for each of said applications at least one access means is provided, a requesting application (10;10₁:10₂:10₃) being adapted to transport an access request for end user personal profile data to the access means (11;11₁;11₂;11₃) of said requesting application, the access request including a user identity associated with the requested personal end user profile, that the interface between an application and the respective access means comprises an Application Programmable Interface based on a generic markup language, that translating means are provided which are adapted to translate or encrypt the identity of a requesting application to create an encrypted request such that the identity of a requesting application will be concealed for an information providing application (20;20₁;20₂;20₃) and the identity of an information providing application will be concealed for a requesting application, that the personal protection profile data comprises information about, for each end user of the system, which of the end user personal profile data that should be accessible by which application or applications, that the central protection server means (30; 30₁; 30₂; 30₃) is adapted to use the encrypted request and the personal protection profile data to determine whether access to the requested end user personal profile data is to be granted or rejected, and in that the central server means (30; 30₁; 30₂; 30₃), or the second information holding means (32; 32₁; 32₂; 32₃), only comprises personal protection profile data, the end user personal profile data being distributed throughout the system.

2. A system according to claim 1,
**characterized in**
**that** there is one access means (11; 21; 11₁; 21₁; 11₂; 21₂; 11₃; 21₃) for each of said applications (10, 20; 10₁, 20₁; 10₂, 20₂; 10₃, 20₃).

3. A system according to claim 1,
**characterized in**
**that** there are a plurality of access means for at least one of said applications.

4. A system according to any of claims 1-3,
**characterized in**
**that** the personal protection profiles are assigned one of a given number of security levels.

5. A system according to claim 4,
**characterized in**
**that** the lowest security level of a personal protection profile of an end user indicates that for all end user personal profile data access is prevented for every application, and the highest level indicates that all end user personal profile data is freely available.

6. A system according to any one of the preceding claims,
**characterized in**
**that** the generic markup language is XML.

7. A system according to any one of the preceding claims,
**characterized in**
**that** the central protection server means (31; 31₁; 31₂; 31₃) is adapted to, in communication with the requesting application, grant or reject access to requested end user personal profile data.

8. A system according to any one of claims 1-6,
**characterized in**
**that** the central protection server means (31₁; 31₁; 31₂; 31₃) is adapted to, in communication with the information providing application, grant or reject access to requested end user personal profile data.

9. A system according to any one of claims 1-6,
**characterized in**
**that** the central protection server means is adapted to, in communication with the requesting application and the information providing application, grant or reject access to requested end user personal profile data.

10. A system according to claim 7, 8 or 9,
**characterized in**
**that** first user identity translating means are provided at least in the central protection server means (30; 30₁; 30₂; 30₃).

11. A system according to claim 8, 9 or 10,
**characterized in**
**that** second user identity translating means are provided in the access means (11; 11₁; 11₂; 11₃) of the requesting application (10; 10₁; 10₂; 10₃).

12. A system according to any one of the preceding claims,
**characterized in**
**that** for an application being part of the system, a general DTD, Document Type Definition, is given to define a maximum allowed flow of end user personal profile data.

13. A system according to claim 12,
**characterized in**
**that** for each user a specific user DTD is given to define the allowed flow of personal data for this particular user.

14. A system according to any one of the preceding claims,
**characterized in**
**that** the request is transported as an XML transport object, an XML Node tree container, tagged with information about the requested end user personal profile data.

15. A system according to any one of the preceding claims,
**characterized in**
**that** the access means (11; 11₁; 11₂; 11₃; 21; 21₁; 21₂; 21₃) of the requesting application or the information holding application (20; 20₁; 20₂; 20₃) and the central protection server means are adapted to use then HTTPS protocol for communication between them (30; 30₁; 30₂; 30₃).

16. A system according to any one of the preceding claims,
**characterized in**
**that** the access means (11; 11₁; 11₂; 11₃; 21; 21₁; 21₂; 21₃) of the information requesting and/or providing application or applications comprise(s) means for encrypting the user identity associated with the requested end user personal profile data.

17. A system according to any one of the preceding claims,
**characterized in**
**that** the access means (11; 11₁; 11₂; 11₃) of the requesting application (10; 10₁; 10₂; 10₃) and/or the access means (21; 21₁; 21₂; 21₃) of the information providing application (20; 20₁; 20₂; 20₃) is/are adapted to digitally sign the request with a private key.

18. A system according to claim 17,
**characterized in**
**that** the central protection server means is adapted to digitally sign the request with a private key of the central protection server means (30; 30₁; 30₂; 30₃), and in that the central protection server means are adapted to verify the digital signature or signatures of the access means (11; 11₁; 11₂; 11₃; 21; 21₁; 21₂; 21₃).

19. A system according to claim 7 and 18,
**characterized in**
**that** the central protection server means (30; 30₁; 30₂; 30₃) comprises means for encrypting at least the user identity associated with the requested information used by the information providing application (20; 20₁; 20₂; 20₃).

20. A system according to any one of the preceding claims,
**characterized in**
**that** at least some of the applications (10₂; 20₂) comprise a cache memory (14₂; 24₂) respectively for temporarily holding information about access requests, such that a previously used session can be reused, at least for a given time period.

21. A method of controlling access to end user personal profile data of an end user in a data communication network running a number of applications comprising or communicating with first information holding means (23; 23₁; 23₂) holding the personal end user personal profile data for the end user,
**characterized in**
**that** it comprises the steps of:
- providing an access request from a requesting application (10; 10₁; 10₂) to an access means (11; 11₁; 11₂) associated with the requesting application using a generic mark-up language, the interface between the requested application and the access means comprising an Application Programmable Interface, the access request for end user personal profile data including a user identity used by the requesting application and associated with the requested end user personal profile data,
- forwarding the request from the access means (11; 11₁; 11₂) of the requesting application to a central protection server means (30; 30₁; 30₂) with second information holding means (32; 32₁; 32₂) holding personal protection profiles for end users registered with the system, the personal protection profiles comprising information about, for each end user of the system, which of the end user personal profile data that should be accessible by which application or applications;
- creating, in the central protection server means, an encrypted request by performing user identification encryption comprising encryption of information providing application user identity such that the user identification of the requesting application will be concealed for an information providing application, and the user identification of the information providing application will be concealed for the requesting application;
- determining, in the central protection server means (30; 30₁; 30₂) in communication with the requesting application, by using the encrypted request and the personal protection profile of the end user, whether access to end user personal profile data is to be granted or denied; whereby the central protection server means (30; 30₁; 30₂) only comprises personal protection profile data, the personal profile data being distributed throughout the system; if access to all or some of the requested end user personal profile data is authorized, returning the encrypted access request updated with granted access rights to the Requesting application;
- sending the encrypted access request to the access means of the information providing application,
- the access means of the information providing application validating the encrypted request, and, if the request is valid, decrypting the user identity of the providing application, unless a session is ongoing in decrypted form, and communicating the request to the information providing application,
- the information providing application (20; 20₁; 20₂) fetching the authorized end user personal profile data from the first information holding means (23; 23₁; 23₂), or setting or updating data as authorized in the first information holding means (23;23₁;23₂).

22. A method of controlling access to end user personal profile data of an end user in a data communication network running a number of applications comprising or communicating with first information holding means (23₃) holding the personal end user personal profile data for the end user,
**characterized in**
**that** it comprises the steps of:
- providing an access request from a requesting application (10₃) to an access means (11₃) associated with the requesting application using a generic mark-up language, the interface between the requested application and the access means comprising an Application Programmable Interface, the access request for end user personal profile data including a user identity used by the requesting application and associated with the requested end user personal profile data;
- encrypting the user identity used by the requesting application in the access means (11₃) of the requesting application (10₃);
- sending the encrypted request to access means (21₃) associated with an information providing application (20₃) over an IP network;
- forwarding the request from the access means (21₃) associated with the information providing application to a central protection server means (31₃) with second information holding means (32₃) holding personal protection profiles for end users registered with the system, the personal protection profiles comprising information about, for each end user of the system, which of the end user personal profile data that should be accessible by which application or applications;
- validating and decrypting, in the central protection server means (31₃), the encrypted user identity used by the requesting application;
- looking up a user identity used by the information providing application and determining, in the central protection server means (31₃) in communication with the second information holding means (32₃), using the decrypted request and according to the personal protection profile, whether access to requested end user personal profile data is to be granted or denied; hereby the central protection server means (31₃ only comprises personal protection profile data, the end user personal profile data being distributed throughout the system and such that the user identification of the requesting application will be concealed for an information providing application, and the user identification of the information providing application will be concealed for the requesting application; if access to the requested end user personal profile data is to be authorized,
- providing a response to the access means (21₃) of the providing application (20₃) comprising the request updated with granted access rights;
- the information providing application (20₃) fetching the authorized end user personal profile data or setting or updating data as authorized in the first information holding means (23₃).

23. The method according to claim 21 or 22,
**characterized in**
**that** the request of a requesting application relates to getting access to end user personal profile data or fetching end user personal profile data in a personal profile and in that, for a granted request; the method comprises the step of:
- transferring the requested end user personal profile data via the access means (21; 21₁; 21₂; 21₃) of an information providing application (20; 20₁; 20₂; 20₃) over a data communication network, to the access means (11; 11₁; 11₂; 11₃) of the requesting application (10; 10₁; 10₂; 10₃).

24. The method according to claim 21 or 22,
**characterized in**
**that** the request of a requesting application relates to setting
or updating end user personal profile data in a personal profile, and in that, for a granted request the method further comprises the step of:
- transferring the end user personal profile data to be set or updated to the information providing application over the data communication network.

25. The method according to anyone of claims 21-24,
**characterized in**
**that** it comprises the steps of:
- digitally signing the request at one or more of the access means (11; 11₁; 11₂; 11₃) associated with the information requesting application, the access means (21; 21₁; 21₂; 21₃) associated with the information providing application and the central protection server means (30; 30₁; 30₂; 30₃), said access means and the central protection server means (30; 30₁; 30₂; 30₃) constituting a personal profile protection network.

## Patentansprüche

1. System zur Endnutzerkontrolle über die Verteilung und Verwaltung von Endnutzer-Personenprofildaten in einem Datenkommunikationssystem, das Kommunikation zwischen Anwendungen (10, 20; 10₁, 20₁; 10₂, 20₂; 10₃, 20₃) ermöglicht und das Dienstanbieter oder Informationsanbieter oder Inhaltsanbieter oder ein erstes Informationshaltemittel (23; 23₁; 23₂; 23₃), das Endnutzer-Personenprofildaten hält, umfasst und/oder mit diesen kommuniziert, wobei das System ein Personenprofilschutznetzwerk mit mindestens einem zentralen Schutzservermittel (30; 30₁; 30₂; 30₃) umfasst, das ein zweites Informationshaltemittel (32; 32₁; 32₂; 32₃), das Personenschutzprofildaten hält, die Personenschutzprofile für jeden im System registrierten Endnutzer umfassen, und eine Anzahl von verteilten Zugangsmitteln (11; 21; 11₁; 21₁; 11₂; 21₂; 11₃; 21₃) umfasst oder mit diesen kommuniziert,
**dadurch gekennzeichnet,**
**dass** für jede der Anwendungen zumindest ein Zugangsmittel bereitgestellt wird, wobei eine anfordernde Anwendung (10; 10₁; 10₂; 10₃) dafür eingerichtet ist, eine Zugangsanforderung für Endnutzer-Personenprofildaten an das Zugangsmittel (11; 11₁; 11₂; 11₃) der anfordernden Anwendung zu transportieren, wobei die Zugangsanforderung eine Nutzeridentität aufweist, die dem angeforderten Endnutzer-Personenprofil zugeordnet ist, dass die Schnittstelle zwischen einer Anwendung und dem jeweiligen Zugangsmittel eine applikationsprogrammierbare Schnittstelle umfasst, die auf einer generischen Auszeichnungssprache beruht, dass Übersetzungsmittel bereitgestellt werden, die dafür eingerichtet sind, die Identität einer anfordernden Anwendung zu übersetzen oder zu verschlüsseln, um eine verschlüsselte Anforderung zu erzeugen, so dass die Identität einer anfordernden Anwendung einer Informationsbereitstellungsanwendung (20; 20₁; 20₂; 20₃) verborgen bleibt und die Identität einer Informationsbereitstellungsanwendung einer anfordernden Anwendung verborgen bleibt, dass die Personenschutzprofildaten Information darüber umfassen, welche der Endnutzer-Personenprofildaten für jeden Endnutzer des Systems durch welche Anwendung oder Anwendungen zugänglich sein sollten, dass das zentrale Schutzservermittel (30; 30₁; 30₂; 30₃) dafür eingerichtet ist, die verschlüsselte Anforderung und die Personenschutzprofildaten zu verwenden, um zu bestimmen, ob Zugang zu den angeforderten Endnutzer-Personenprofildaten zu gewähren oder zurückzuweisen ist, und dass das zentrale Servermittel (30; 30₁; 30₂; 30₃) oder das zweite Informationshaltemittel (32; 32₁; 32₂; 32₃) nur Personenschutzprofildaten umfasst, wobei die Endnutzer-Personenprofildaten über das gesamte System verteilt sind.

2. System nach Anspruch 1,
**dadurch gekennzeichnet,**
**dass** ein Zugangsmittel (11; 21; 11₁; 21₁; 11₂; 21₂; 11₃; 21₃) für jede der Anwendungen (10, 20; 10_{1,} 20₁; 10₂, 20₂; 10₃, 20₃) vorhanden ist.

3. System nach Anspruch 1,
**dadurch gekennzeichnet,**
**dass** eine Vielzahl von Zugangsmitteln für zumindest eine der Anwendungen vorhanden ist.

4. System nach einem der Ansprüche 1 bis 3,
**dadurch gekennzeichnet,**
**dass** den Personenschutzprofilen eine Sicherheitsstufe aus einer gegebenen Anzahl von Sicherheitsstufen zugeordnet ist.

5. System nach Anspruch 4,
**dadurch gekennzeichnet,**
**dass** die unterste Sicherheitsstufe eines Personenschutzprofils eines Endnutzers anzeigt, dass für alle Endnutzer-Personenprofildaten Zugang für jede Anwendung verhindert ist und die höchste Stufe anzeigt, dass alle Endnutzer-Personenprofildaten frei verfügbar sind.

6. System nach einem der vorhergehenden Ansprüche,
**dadurch gekennzeichnet,**
**dass** die generische Auszeichnungssprache XML ist.

7. System nach einem der vorhergehenden Ansprüche,
**dadurch gekennzeichnet,**
**dass** das zentrale Schutzservermittel (31; 31₁; 31₂; 31₃) dafür eingerichtet ist, in Kommunikation mit der anfordernden Anwendung Zugang zu angeforderten Endnutzer-Personenprofildaten zu gewähren oder zurückzuweisen.

8. System nach einem der Ansprüche 1 bis 6,
**dadurch gekennzeichnet,**
**dass** das zentrale Schutzservermittel (31; 31₁; 31₂; 31₃) dafür eingerichtet ist, in Kommunikation mit der Informationsbereitstellungsanwendung Zugang zu angeforderten Endnutzer-Personenprofildaten zu gewähren oder zurückzuweisen.

9. System nach einem der Ansprüche 1 bis 6,
**dadurch gekennzeichnet,**
**dass** das zentrale Schutzservermittel dafür eingerichtet ist, in Kommunikation mit der anfordernden Anwendung und der Informationsbereitstellungsanwendung Zugang zu angeforderten Endnutzer-Personenprofildaten zu gewähren oder zurückzuweisen.

10. System nach Anspruch 7, 8 oder 9,
**dadurch gekennzeichnet,**
**dass** erste Nutzeridentitätsübersetzungsmittel zumindest im zentralen Schutzservermittel (30; 30₁; 30₂; 30₃) bereitgestellt werden.

11. System nach Anspruch 8, 9 oder 10,
**dadurch gekennzeichnet,**
**dass** zweite Nutzeridentitätsübersetzungsmittel im Zugangsmittel (11; 11₁; 11₂; 11₃) der anfordernden Anwendung (10; 10₁; 10₂; 10₃) bereitgestellt werden.

12. System nach einem der vorhergehenden Ansprüche,
**dadurch gekennzeichnet,**
**dass** für eine Anwendung, die Teil des Systems ist, eine allgemeine DTD, Dokumententypdefinition, gegeben ist, um einen maximal zulässigen Endnutzer-Personenprofildatenfluss zu definieren.

13. System nach Anspruch 12,
**dadurch gekennzeichnet,**
**dass** für jeden Nutzer eine spezifische Nutzer-DTD gegeben ist, um den zulässigen Personendatenfluss für diesen bestimmten Nutzer zu definieren.

14. System nach einem der vorhergehenden Ansprüche,
**dadurch gekennzeichnet,**
**dass** die Anforderung als ein XML-Transportobjekt, ein XML-Knotenbaum-Container, der mit Information über die angeforderten Endnutzerprofildaten markiert ist, transportiert wird.

15. System nach einem der vorhergehenden Ansprüche,
**dadurch gekennzeichnet,**
**dass** die Zugangsmittel (11; 11₁; 11₂; 11₃; 21; 21₁; 21₂; 21₃) der anfordernden Anwendung oder der Informationshalteanwendung (20; 20₁; 20₂; 20₃) und das zentrale Schutzservermittel dafür eingerichtet sind, das HTTPS-Protokoll zur Kommunikation zwischen ihnen (30; 30₁; 30₂; 30₃) zu verwenden.

16. System nach einem der vorhergehenden Ansprüche,
**dadurch gekennzeichnet,**
**dass** das/die Zugangsmittel (11; 11₁; 11₂; 11₃; 21; 21₁; 21₂; 21₃) der informationsanfordernden und/oder Informationsbereitstellungsanwendung oder -anwendungen Mittel zur Verschlüsselung der Nutzeridentität, die den angeforderten Endnutzer-Personenprofildaten zugeordnet ist, aufweist/aufweisen.

17. System nach einem der vorhergehenden Ansprüche,
**dadurch gekennzeichnet,**
**dass** das Zugangsmittel (11; 11₁; 11₂; 11₃) der anfordernden Anwendung (10; 10₁; 10₂; 10₃) und/oder das Zugangsmittel (21; 21₁; 21₂; 21₃) der Informationsbereitstellungsanwendung (20; 20₁; 20₂; 20₃) dafür eingerichtet ist/sind, die Anforderung mit einem privaten Schlüssel digital zu signieren.

18. System nach Anspruch 17,
**dadurch gekennzeichnet,**
**dass** das zentrale Schutzservermittel dafür eingerichtet ist, die Anforderung mit einem privaten Schlüssel des zentralen Schutzservermittels (30; 30₁; 30₂; 30₃) digital zu signieren, und dass das zentrale Schutzservermittel dafür eingerichtet ist, die digitale Signatur oder die digitalen Signaturen der Zugangsmittel (11; 11₁; 11₂; 11₃; 21; 21₁; 21₂; 21₃) als gültig zu bestätigen.

19. System nach Anspruch 7 und 18,
**dadurch gekennzeichnet,**
**dass** das zentrale Schutzservermittel (30; 30₁; 30₂; 30₃) Mittel zur Verschlüsselung zumindest der Nutzeridentität aufweist, die der angeforderten Information zugeordnet ist und die von der Informationsbereitstellungsanwendung (20; 20₁; 20₂; 20₃) verwendet wird.

20. System nach einem der vorhergehenden Ansprüche,
**dadurch gekennzeichnet,**
**dass** zumindest einige der Anwendungen (10₂; 20₂) einen Cache-Speicher (14₂; 24₂) jeweils zum vorübergehenden Halten von Information über Zugangsanforderungen umfassen, so dass eine vorher benutzte Sitzung, zumindest für eine gegebene Zeitperiode, wieder benutzt werden kann.

21. Verfahren zur Kontrolle des Zugangs zu Endnutzer-Personenprofildaten eines Endnutzers in einem Datenkommunikationsnetzwerk, das eine Anzahl von Anwendungen betreibt und das ein erstes Informationshaltemittel (23; 23₁; 23₂), das die persönlichen Endnutzer-Personenprofildaten für den Endnutzer hält, umfasst oder mit diesem kommuniziert,
**dadurch gekennzeichnet,**
**dass** es die folgenden Schritte umfasst:
- Bereitstellen einer Zugangsanforderung von einer anfordernden Anwendung (10; 10₁; 10₂) an ein der anfordernden Anwendung zugeordnetes Zugangsmittel (11; 11₁; 11₂) unter Verwendung einer generischen Auszeichnungssprache, wobei die Schnittstelle zwischen der angeforderten Anwendung und dem Zugangsmittel eine anwendungsprogrammierbare Schnittstelle umfasst, wobei die Zugangsanforderung für Endnutzer-Personenprofildaten eine Nutzeridentität aufweist, die von der anfordernden Anwendung verwendet wird und die den angeforderten Endnutzer-Personenprofildaten zugeordnet ist,
- Weiterleiten der Anforderung vom Zugangsmittel (11; 11₁; 11₂) der anfordernden Anwendung an das zentrale Schutzservermittel (30; 30₁; 30₂), wobei das zweite Informationshaltemittel (32; 32₁; 32₂) Personenschutzprofile für im System registrierte Endnutzer hält, wobei die Personenschutzprofile Information darüber umfassen, welche der Endnutzer-Personenprofildaten für jeden Endnutzer des Systems durch welche Anwendung oder Anwendungen zugänglich sein sollten;
- im zentralen Schutzservermittel erfolgendes Erzeugen einer verschlüsselten Anforderung durch Durchführung einer Nutzeridentifikationsverschlüsselung, die eine Verschlüsselung einer Informationsbereitstellungsanwendungsnutzeridentität umfasst, so dass die Nutzeridentifikation der anfordernden Anwendung einer Informationsbereitstellungsanwendung verborgen bleibt und die Nutzeridentifikation der Informationsbereitstellungsanwendung der anfordernden Anwendung verborgen bleibt;
- im zentralen Schutzservermittel (30; 30₁; 30₂) in Kommunikation mit der anfordernden Anwendung und unter Verwendung der verschlüsselten Anforderung und des Personenschutzprofils des Endnutzers erfolgendes Bestimmen, ob Zugang zu Endnutzer-Personenprofildaten zu gewähren oder zurückzuweisen ist; wodurch das zentrale Schutzservermittel (30; 30₁; 30₂) nur Personenschutzprofildaten umfasst, wobei die Personenprofildaten im gesamten System verteilt sind;
wenn Zugang zu allen oder einigen der angeforderten Endnutzer-Personenprofildaten bewilligt ist,
Rückmelden der verschlüsselten Zugangsanforderung, die mit gewährten Zugangsrechten aktualisiert ist, an die anfordernde Anwendung;
- Senden der verschlüsselten Zugangsanforderung an das Zugangsmittel der Informationsbereitstellungsanwendung,
- durch das Zugangsmittel der Informationsbereitstellungsanwendung erfolgendes Bestätigen der verschlüsselten Anforderung als gültig, und wenn die Anforderung gültig ist, Entschlüsseln der Nutzeridentität der Bereitstellungsanwendung, außer, wenn eine Sitzung in entschlüsselter Form weitergeht, und Übermitteln der Anforderung an die Informationsbereitstellungsanwendung,
- durch die Informationsbereitstellungsanwendung (20; 20₁; 20₂) erfolgendes Holen der bewilligten Endnutzer-Personenprofildaten aus dem ersten Informationshaltemittel (23; 23₁; 23₂) oder Festlegen oder Aktualisieren von Daten als bewilligt im ersten Informationshaltemittel (23; 23₁; 23₂)

22. Verfahren zur Kontrolle des Zugangs zu Endnutzer-Personenprofildaten eines Endnutzers in einem Datenkommunikationsnetzwerk, das eine Anzahl von Anwendungen betreibt und das ein erstes Informationshaltemittel (23₃), das die persönlichen Endnutzer-Personenprofildaten für den Endnutzer hält, umfasst oder mit diesem kommuniziert,
**dadurch gekennzeichnet,**
**dass** es die folgenden Schritte umfasst:
- Bereitstellen einer Zugangsanforderung von einer anfordernden Anwendung (10₃) an ein der anfordernden Anwendung zugeordnetes Zugangsmittel (11₃) unter Verwendung einer generischen Auszeichnungssprache, wobei die Schnittstelle zwischen der angeforderten Anwendung und dem Zugangsmittel eine anwendungsprogrammierbare Schnittstelle umfasst, wobei die Zugangsanforderung für Endnutzer-Personenprofildaten eine Nutzeridentität aufweist, die von der anfordernden Anwendung verwendet wird und die den angeforderten Endnutzer-Personenprofildaten zugeordnet ist;
- Verschlüsseln der von der anfordernden Anwendung verwendeten Nutzeridentität im Zugangsmittel (11₃) der anfordernden Anwendung (10₃);
- Senden der verschlüsselten Anforderung über ein IP-Netzwerk an ein Zugangsmittel (21₃), das einer Informationsbereitstellungsanwendung (20₃) zugeordnet ist;
- Weiterleiten der Anforderung vom Zugangsmittel (21₃), das der Informationsbereitstellungsanwendung zugeordnet ist, an ein zentrales Schutzservermittel (31₃), wobei ein zweites Informationshaltemittel (32₃) Personenschutzprofile für im System registrierte Endnutzer hält, wobei die Personenschutzprofile Information darüber umfassen, welche der Endnutzer-Personenprofildaten für jeden Endnutzer des Systems durch welche Anwendung oder Anwendungen zugänglich sein sollten;
- im zentralen Schutzservermittel (31₃) erfolgendes Bestätigen der von der anfordernden Anwendung verwendeten verschlüsselten Nutzeridentität als gültig und Entschlüsseln derselben;
- Nachschlagen einer von der Informationsbereitstellungsanwendung verwendeten Nutzeridentität und Bestimmen im zentralen Schutzservermittel (31₃) in Kommunikation mit dem zweiten Informationshaltemittel (32₃) unter Verwendung der entschlüsselten Anforderung und gemäß dem Personenschutzprofil, ob Zugang zu angeforderten Endnutzer-Personenprofildaten zu gewähren oder zurückzuweisen ist; wodurch das zentrale Schutzservermittel (31₃) nur Personenschutzprofildaten umfasst, wobei die Endnutzer-Personenprofildaten im gesamten System verteilt sind, und so dass die Nutzeridentifikation der anfordernden Anwendung einer Informationsbereitstellungsanwendung verborgen bleibt und die Nutzeridentifikation der Informationsbereitstellungsanwendung der anfordernden Anwendung verborgen bleibt;
wenn Zugang zu den anfordernden Endnutzer-Personenprofildaten zu bewilligen ist,
- Übergeben einer Antwort an das Zugangsmittel (21₃) der Bereitstellungsanwendung (20₃), die die mit den gewährten Zugangsrechten aktualisierte Anforderung umfasst;
- durch die Informationsbereitstellungsanwendung (20₃) erfolgendes Holen der bewilligten Endnutzer-Personenprofildaten oder Festlegen oder Aktualisieren von Daten als bewilligt im ersten Informationshaltemittel (23₃).

23. Verfahren nach Anspruch 21 oder 22,
**dadurch gekennzeichnet,**
**dass** die Anforderung einer anfordernden Anwendung sich auf das Erlangen von Zugang zu Endnutzer-Personenprofildaten oder das Holen von Endnutzer-Personenprofildaten in einem Personenprofil bezieht und dass bei einer gewährten Anforderung das Verfahren die folgenden Schritte umfasst:
- Weitergeben der angeforderten Endnutzer-Personenprofildaten mittels des Zugangsmittels (21; 21₁; 21₂; 21₃) einer Informationsbereitstellungsanwendung (20; 20₁; 20₂; 20₃) über ein Datenkommunikationsnetzwerk an das Zugangsmittel (11; 11₁; 11₂; 11₃) der anfordernden Anwendung (10; 10₁; 10₂; 10₃).

24. Verfahren nach Anspruch 21 oder 22,
**dadurch gekennzeichnet,**
**dass** die Anforderung der anfordernden Anwendung sich auf das Festlegen oder Aktualisieren von Endnutzer-Personenprofildaten in einem Personenprofil bezieht und dass bei einer gewährten Anforderung das Verfahren ferner den folgenden Schritt umfasst:
- Weitergeben der Endnutzer-Personenprofildaten, die festzulegen oder zu aktualisieren sind, über das Datenkommunikationsnetzwerk an die Informationsbereitstellungsanwendung.

25. Verfahren nach einem der Ansprüche 21 bis 24,
**dadurch gekennzeichnet,**
**dass** es die folgenden Schritte umfasst:
- digitales Signieren der Anforderung in einem oder mehreren von Folgendem: dem Zugangsmittel (11; 11₁; 11₂; 11₃), das der informationsanfordernden Anwendung zugeordnet ist, dem Zugangsmittel (21; 21₁; 21₂; 21₃), das der Informationsbereitstellungsanwendung zugeordnet ist, und dem zentralen Schutzservermittel (30; 30₁; 30₂; 30₃), wobei die Zugangsmittel und das zentrale Schutzservermittel (30; 30₁; 30₂; 30₃) ein Personenprofilschutznetzwerk bilden.

## Revendications

1. Système de contrôle, par l'utilisateur final, de la distribution et de la maintenance de données de profil personnel d'utilisateur final dans un système de communication de données délivrant une communication entre des applications (10, 20; 10_{1,} 20₁; 10₂, 20₂; 10₃, 20₃) comportant et/ou communiquant avec des fournisseurs de services ou des fournisseurs d'informations ou des fournisseurs de contenu ou un premier moyen de conservation d'informations (23; 23₁; 23₂; 23₃) conservant des données de profil personnel d'utilisateur final, ledit système comprenant un réseau de protection de profil personnel avec au moins un moyen de serveur de protection central (30; 30₁; 30₂; 30₃) comprenant ou communiquant avec un second moyen de conservation d'informations (32; 32₁; 32₂; 32₃) conservant des données de profil de protection personnel comprenant des profils de protection personnels pour chaque utilisateur final enregistré sur le système, et un nombre de moyens d'accès distribué (11; 21; 11₁; 21₁; 11₂; 21₂; 11₃; 21₃),
**caractérisé en ce que**
pour chacune desdites applications, au moins un moyen d'accès est prévu, une application demandeuse (10; 10₁; 10₂; 10₃) étant apte à transporter une demande d'accès pour des données de profil personnel d'utilisateur final au moyen d'accès (11; 11₁; 11₂; 11₃) de ladite application demandeuse, la demande d'accès comportant une identité d'utilisateur associée au profil d'utilisateur final personnel demandé, **en ce que** l'interface entre une application et le moyen d'accès respectif comporte une interface de programmation d'application basée sur un langage de balisage générique, **en ce que** des moyens de traduction sont prévus lesquels sont aptes à traduire ou à crypter l'identité d'une application demandeuse en vue de créer une demande cryptée de sorte que l'identité d'une application demandeuse sera masquée pour une application de fourniture d'informations (20; 20₁; 20₂; 20₃) et que l'identité d'une application de fourniture d'informations sera masquée pour une application demandeuse, **en ce que** les données de profil de protection personnel comportent des informations indiquant, pour chaque utilisateur final du système, quelles sont les données de profil personnel d'utilisateur final qui doivent être accessibles et par quelle(s) application ou applications, **en ce que** le moyen de serveur de protection central (30; 30₁; 30₂; 30₃) est apte à utiliser la demande cryptée et les données de profil de protection personnel en vue de déterminer si un accès aux données requises de profil personnel d'utilisateur final doit être accordé ou refusé, et **en ce que** le moyen de serveur central (30; 30₁; 30₂; 30₃), ou le second moyen de conservation d'informations (32; 32₁; 32₂; 32₃), comporte uniquement des données de profil de protection personnel, les données de profil personnel d'utilisateur final étant distribuées dans l'ensemble du système.

2. Système selon la revendication 1,
**caractérisé en ce que**
il existe un moyen d'accès (11; 21; 11₁; 21₁; 11₂; 21₂; 11₃; 21₃) pour chacune desdites applications (10; 20; 10₁; 20₁; 10₂; 20₂; 10₃; 20₃).

3. Système selon la revendication 1,
**caractérisé en ce que**
il existe une pluralité de moyens d'accès pour au moins l'une desdites applications.

4. Système selon l'une quelconque des revendications 1 à 3,
**caractérisé en ce que**
les profils de protection personnels reçoivent l'un d'un nombre donné de niveaux de sécurité.

5. Système selon la revendication 4,
**caractérisé en ce que**
le niveau de sécurité le plus faible d'un profil de protection personnel d'un utilisateur final indique que, pour toutes les données de profil personnel d'utilisateur final, l'accès est empêché pour chaque application, et le niveau le plus élevé indique que toutes les données de profil personnel d'utilisateur final sont librement disponibles.

6. Système selon l'une quelconque des revendications précédentes,
**caractérisé en ce que**
le langage de balisage générique est XML.

7. Système selon l'une quelconque des revendications précédentes,
**caractérisé en ce que**
le moyen de serveur de protection central (31; 31₁; 31₂; 31₃) est en mesure, en communication avec l'application demandeuse, d'accorder ou de refuser l'accès à des données requises de profil personnel d'utilisateur final.

8. Système selon l'une quelconque des revendications 1 à 6,
**caractérisé en ce que**
le moyen de serveur de protection central (31; 31₁; 31₂; 31₃) est en mesure, en communication avec l'application de fourniture d'informations, d'accorder ou de refuser l'accès à des données requises de profil personnel d'utilisateur final.

9. Système selon l'une quelconque des revendications 1 à 6,
**caractérisé en ce que**
le moyen de serveur de protection central est en mesure, en communication avec l'application demandeuse et l'application de fourniture d'informations, d'accorder ou de refuser l'accès à des données requises de profil personnel d'utilisateur final.

10. Système selon la revendication 7, 8 ou 9,
**caractérisé en ce que**
un premier moyen de traduction d'identité d'utilisateur est délivré au moins dans le moyen de serveur de protection central (30; 30₁; 30₂; 30₃).

11. Système selon la revendication 8, 9 ou 10,
**caractérisé en ce que**
un second moyen de traduction d'identité d'utilisateur est délivré dans le moyen d'accès (11; 11₁; 11₂; 11₃) de l'application demandeuse (10; 10₁; 10₂; 10₃).

12. Système selon l'une quelconque des revendications précédentes,
**caractérisé en ce que**
pour une application faisant partie du système, une définition de type de document générique, DTD, est donnée pour définir un flux maximum autorisé de données de profil personnel d'utilisateur final.

13. Système selon la revendication 12,
**caractérisé en ce que**
pour chaque utilisateur, une définition DTD spécifique à l'utilisateur est donnée pour définir le flux autorisé de données personnelles pour cet utilisateur particulier.

14. Système selon l'une quelconque des revendications précédentes,
**caractérisé en ce que**
la demande est transportée sous la forme d'un objet de transport XML, un conteneur d'arborescence de noeud XML, balisé par des informations sur les données requises de profil personnel d'utilisateur final.

15. Système selon l'une quelconque des revendications précédentes,
**caractérisé en ce que**
le moyen d'accès (11; 11₁; 11₂; 11₃; 21; 21₁; 21₂; 21₃) de l'application demandeuse ou de l'application de conservation d'informations (20; 20₁; 20₂; 20₃) et le moyen de serveur de protection central sont aptes à utiliser le protocole HTTPS pour la communication entre eux (30; 30₁; 30₂; 30₃).

16. Système selon l'une quelconque des revendications précédentes,
**caractérisé en ce que**
le/les moyen(s) d'accès (11; 11₁; 11₂; 11₃; 21; 21₁; 21₂; 21₃) de l'application ou des applications de fourniture et/ou de demande d'informations comporte(nt) un moyen de cryptage de l'identité d'utilisateur associée aux données requises de profil personnel d'utilisateur final.

17. Système selon l'une quelconque des revendications précédentes,
**caractérisé en ce que**
le moyen d'accès (11; 11₁; 11₂; 11₃) de l'application demandeuse (10; 10₁; 10₂; 10₃) et/ou le moyen d'accès (21; 21₁; 21₂; 21₃) de l'application de fourniture d'informations (20; 20₁; 20₂; 20₃) est/sont apte(s) à signer numériquement la demande avec une clé privée.

18. Système selon la revendication 17,
**caractérisé en ce que**
le moyen de serveur de protection central est apte à signer numériquement la demande avec une clé privée du moyen de serveur de protection central (30; 30₁; 30₂; 30₃), et **en ce que** le moyen de serveur de protection central est apte à vérifier la signature numérique ou les signatures numériques du moyen d'accès (11; 11₁; 11₂; 11₃; 21; 21₁; 21₂; 21₃).

19. Système selon les revendications 7 et 18,
**caractérisé en ce que**
le moyen de serveur de protection central (30; 30₁; 30₂; 30₃) comprend un moyen permettant de crypter au moins l'identité d'utilisateur associée aux informations requises utilisées par l'application de fourniture d'informations (20; 20₁; 20₂; 20₃).

20. Système selon l'une quelconque des revendications précédentes,
**caractérisé en ce que**
au moins certaines des applications (10₂; 20₂) comportent une mémoire cache (14₂; 24₂), respectivement, pour conserver temporairement des informations sur des demandes d'accès, de sorte qu'une session utilisée précédemment peut être réutilisée, au moins pour une période de temps donnée.

21. Procédé pour contrôler un accès à des données de profil personnel d'utilisateur final d'un utilisateur final dans un réseau de communication de données exploitant un nombre d'applications comprenant, ou communiquant avec, un premier moyen de conservation d'informations (23; 23₁; 23₂) conservant les données de profil personnel d'utilisateur final pour l'utilisateur final,
**caractérisé en ce que**
il comporte les étapes ci-dessous consistant à:
- fournir une demande d'accès d'une application demandeuse (10; 10₁; 10₂) à un moyen d'accès (11; 11₁; 11₂) associé à l'application demandeuse en faisant appel à un langage de balisage générique, l'interface entre l'application demandée et le moyen d'accès comprenant une interface de programmation d'application, la demande d'accès pour les données de profil personnel d'utilisateur final comportant une identité d'utilisateur utilisée par l'application demandeuse et associée aux données requises de profil personnel d'utilisateur final,
- acheminer la demande du moyen d'accès (11; 11₁; 11₂) de l'application demandeuse à un moyen de serveur de protection central (30; 30₁; 30₂) avec un second moyen de conservation d'informations (32; 32₁; 32₂) conservant des profils de protection personnels pour des utilisateurs finaux enregistrés sur le système, les profils de protection personnels comprenant des informations indiquant, pour chaque utilisateur final du système, quelles données de profil personnel d'utilisateur final doivent être accessibles et par quelle(s) application ou applications;
- créer, dans le moyen de serveur de protection central, une demande cryptée en mettant en oeuvre un cryptage d'identification d'utilisateur comprenant le cryptage d'identité d'utilisateur d'application de fourniture d'informations de sorte que l'identification d'utilisateur de l'application demandeuse sera masquée pour une application de fourniture d'informations et que l'identification d'utilisateur de l'application de fourniture d'informations sera masquée pour l'application demandeuse;
- déterminer, dans le moyen de serveur de protection central (30; 30₁; 30₂) en communication avec l'application demandeuse, en utilisant la demande cryptée et le profil de protection personnel de l'utilisateur final, si l'accès aux données de profil personnel d'utilisateur final est accordé ou refusé; moyennant quoi le moyen de serveur de protection central (30; 30₁; 30₂) comporte uniquement des données de profil de protection personnel, les données de profil personnel étant distribuées dans l'ensemble du système;
si l'accès à toutes ou certaines des données requises de profil personnel d'utilisateur final est autorisé,
renvoyer la demande d'accès cryptée mise à jour avec les droits d'accès accordés à l'application demandeuse;
- transmettre la demande d'accès cryptée au moyen d'accès de l'application de fourniture d'informations,
- le moyen d'accès de l'application de fourniture d'informations validant la demande cryptée, et, si la demande est valide, décryptant l'identité d'utilisateur de l'application de fourniture, sauf si une session est en cours dans une forme décryptée, et communiquant la demande à l'application de fourniture d'informations,
- l'application de fourniture d'informations (20; 20₁; 20₂) récupérant les données de profil personnel d'utilisateur final autorisées à partir du premier moyen de conservation d'informations (23; 23₁; 23₂), ou définissant, ou mettant à jour, des données en tant qu'autorisées dans le premier moyen de conservation d'informations (23; 23₁; 23₂).

22. Procédé pour contrôler un accès à des données de profil personnel d'utilisateur final d'un utilisateur final dans un réseau de communication de données exploitant un nombre d'applications comprenant, ou communiquant avec, un premier moyen de conservation d'informations (23₃) conservant les données de profil personnel d'utilisateur final pour l'utilisateur final,
**caractérisé en ce que**
il comprend les étapes ci-après consistant à:
- fournir une demande d'accès d'une application demandeuse (10₃) à un moyen d'accès (11₃) associé à l'application demandeuse en faisant appel à un langage de balisage générique, l'interface entre l'application demandée et le moyen d'accès comprenant une interface de programmation d'application, la demande d'accès pour les données de profil personnel d'utilisateur final comportant une identité d'utilisateur utilisée par l'application demandeuse et associée aux données requises de profil personnel d'utilisateur final;
- crypter l'identité d'utilisateur utilisée par l'application demandeuse dans le moyen d'accès (11₃), de l'application demandeuse (10₃);
- transmettre la demande cryptée au moyen d'accès (21₃) associé à une application de fourniture d'informations (20₃) sur un réseau IP;
- acheminer la demande du moyen d'accès (21₃) associé à l'application de fourniture d'informations à un moyen de serveur de protection central (31₃) avec un second moyen de conservation d'informations (32₃) conservant des profils de protection personnels pour des utilisateurs finaux enregistrés sur le système, les profils de protection personnels comprenant des informations indiquant, pour chaque utilisateur final du système, quelles données de profil personnel d'utilisateur final doivent être accessibles et par quelle(s) application ou applications;
- valider ou décrypter, dans le moyen de serveur de protection centrale (31₃), l'identité d'utilisateur cryptée utilisée par l'application demandeuse;
- rechercher une identité d'utilisateur utilisée par l'application de fourniture d'informations et déterminer, dans le moyen de serveur de protection central (31₃) en communication avec le second moyen de conservation d'informations (32₃), en utilisant la demande décryptée et selon le profil de protection personnel, si l'accès aux données requises de profil personnel d'utilisateur final doit être accordé ou refusé, moyennant quoi le moyen de serveur de protection central (31₃) comprend uniquement des données de profil de protection personnel, les données de profil personnel d'utilisateur final étant distribuées dans l'ensemble du système, et de sorte que l'identification d'utilisateur de l'application demandeuse sera masquée pour une application de fourniture d'informations, et que l'identification d'utilisateur de l'application de fourniture d'informations sera masquée pour l'application demandeuse;
si l'accès aux données requises de profil personnel d'utilisateur final doit être autorisé,
- délivrer une réponse au moyen d'accès (21₃) de l'application de fourniture (20₃) comprenant la demande mise à jour avec les droits d'accès accordés;
- l'application de fourniture d'informations (20₃) récupérant les données autorisées de profil personnel d'utilisateur final ou définissant, ou mettant à jour, les données en tant qu'autorisées dans le premier moyen de conservation d'informations (23₃).

23. Procédé selon la revendication 21 ou 22,
**caractérisé en ce que**
la demande d'une application demandeuse concerne l'obtention d'un accès à des données de profil personnel d'utilisateur final ou la récupération de données de profil personnel d'utilisateur final dans un profil personnel et **en ce que**, pour une demande acceptée, le procédé comprend l'étape ci-dessous consistant à:
- transférer les données requises de profil personnel d'utilisateur final par l'intermédiaire du moyen d'accès (21; 21₁; 21₂; 21₃) d'une application de fourniture d'informations (20; 20₁; 20₂, 20₃) sur un réseau de communication de données, au moyen d'accès (11; 11₁; 11₂; 11₃) de l'application demandeuse (10; 10₁; 10₂; 10₃).

24. Procédé selon la revendication 21 ou 22,
**caractérisé en ce que**
la demande d'une application demandeuse concerne la définition ou la mise à jour de données de profil personnel d'utilisateur final dans un profil personnel, et **en ce que**, pour une demande acceptée, le procédé comprend en outre l'étape consistant à:
- transférer les données de profil personnel d'utilisateur final à définir ou à mettre à jour à l'application de fourniture d'informations sur le réseau de communication de données.

25. Procédé selon l'une quelconque des revendications 21 à 24, **caractérisé en ce que** il comprend les étapes ci-dessous consistant à:
- signer numériquement la demande au niveau d'un ou plusieurs parmi le moyen d'accès (11; 11₁; 11₂; 11₃) associé à l'application de demande d'informations, le moyen d'accès (21; 21₁; 21₂; 21₃) associé à l'application de fourniture d'informations et le moyen de serveur de protection central (30; 30₁; 30₂; 30₃), ledit moyen d'accès et le moyen de serveur de protection central (30; 30₁; 30₂; 30₃) constituant un réseau de protection de profil personnel.
